(19) Europäisches Patentamt
European Patent Office
Office européen des brevets

(11) EP 3 452 540 B1

(12) # EUROPÄISCHE PATENTSCHRIFT

(45) Veröffentlichungstag und Bekanntmachung des Hinweises auf die Patenterteilung:
**10.03.2021 Patentblatt 2021/10**

(21) Anmeldenummer: **17718067.6**

(22) Anmeldetag: **18.04.2017**

(51) Int Cl.:
***C08K 5/00*** *(2006.01)* ***C09J 179/00*** *(2006.01)*

(86) Internationale Anmeldenummer:
**PCT/EP2017/059166**

(87) Internationale Veröffentlichungsnummer:
**WO 2017/190949 (09.11.2017 Gazette 2017/45)**

(54) **HÄRTBARE KLEBEMASSE UND DARAUF BASIERENDE REAKTIVKLEBEBÄNDER**
CURABLE ADHESIVE COMPOSITION AND CORRESPONDING REACTIV ADHESIVE TAPES
COMPOSITION ADHESIVE CURABLE ET BANDES ADHÉSIFS RÉACTIVES CORRESPONDANTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2016 DE 102016207548**

(43) Veröffentlichungstag der Anmeldung:
**13.03.2019 Patentblatt 2019/11**

(73) Patentinhaber: **tesa SE**
**22848 Norderstedt (DE)**

(72) Erfinder:
- **DOLLASE, Thilo**
  **22397 Hamburg (DE)**
- **BRODBECK, Markus**
  **72555 Metzingen (DE)**
- **FISCHER, Alexander**
  **22303 Hamburg (DE)**
- **KUPSKY, Marco**
  **25451 Quickborn (DE)**
- **KOOP, Matthias**
  **22848 Norderstedt (DE)**

(74) Vertreter: **tesa SE**
**Hugo-Kirchberg-Straße 1**
**22848 Norderstedt (DE)**

(56) Entgegenhaltungen:
**WO-A1-2004/041943 WO-A1-2014/059055**
**US-A1- 2007 026 572**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 452 540 B1

Printed by Jouve, 75001 PARIS (FR)

## Beschreibung

Die Erfindung betrifft eine thermisch härtbare Klebemasse auf Poly(meth)acrylatbasis, ein Verklebungsverfahren mit einer solchen Klebemasse sowie entsprechende Klebeverbunde.

### *Hintergrund*

Klebebänder werden heute in vielfältiger Form z. B. als Hilfsmittel in Prozessen und zum Verbinden verschiedener Objekte verwendet. Selbstklebebänder, die Haftklebemassen enthalten, weisen dabei permanente Klebrigkeit auf. Sie können ohne weitere Härtung üblicherweise unmittelbar nach Verklebung ihre Verbindungsaufgabe ausüben. Mit solchen Selbstklebebändern sind mitunter sehr hohe Verklebungsfestigkeiten realisierbar. Trotzdem besteht in bestimmten Anwendungen der Bedarf nach Klebelösungen, die noch höhere Verklebungsfestigkeiten erlauben. Viele solcher Klebesysteme werden in einem Heißverpressschritt appliziert. Sie Schmelzen dann auf, benetzen den Verklebungsuntergrund und bauen während des Abkühlens durch Erstarrung Festigkeit auf. Solche Klebesysteme können zudem noch chemische Reaktivität aufweisen. Manche heißverpressbaren Klebesysteme, die in Klebebandform zur Anwendung kommen, zeigen unter Heißpressbedingungen ein unerwünschtes Ausquetschen ("Oozing"), da mit der Temperatur die Schmelzviskosität sinkt bzw. durch temperaturbedingten Kohäsionsverlust das Klebesystem fließfähig wird. Bei Flüssigklebesystemen stellt sich das Problem des Ausquetschens bereits bei Raumtemperatur. Im Verklebungsprozess ist dagegen ein gutes Auffließverhalten auf die zu verklebenden Substrate erforderlich, um eine optimale Kontaktfläche der Klebeschicht zu erreichen. Dies erfordert ein gewisses Fließverhalten des Klebesystems unter Verpressbedingungen.

Unter dem Begriff "Ausquetschen" oder auch "Oozing" (Test A) ist im Sinne dieser Erfindung ein seitliches Austreten der nicht ausgehärteten oder nicht ausreichend ausgehärteten Klebemasse aus einer Klebschicht oder einem Klebeverbund zu verstehen. Dies kann als kalter Fluss und/oder unter Druck und/oder bei erhöhter Temperatur geschehen und ist nicht erwünscht.

Bei Reaktivklebebändern besteht zudem der Bedarf, dass sich die Klebesysteme schnell verarbeiten lassen und zwar im Hinblick auf die Aktivierungsdauer für die Initiierung der Härtungsreaktion. Neben der Aktivierung soll auch die Aushärtung bis zum gewünschten Härtungsgrad schnell ablaufen. Ein besonders vorteilhaftes Reaktivsystem in diesem Zusammenhang basiert auf Epoxiden.

Härtbare Klebesysteme auf Epoxidbasis, die in Form von Klebebändern zum Einsatz kommen, enthalten oft eine Filmbildnerkomponente, wobei es sich um ein thermoplastisches Polymer, ein Elastomer oder ein thermoplastisches Elastomer handeln kann, und eine Reaktivkomponente häufig bestehend aus einem Reaktivharz, in diesen Fällen Epoxidbasierend, und einem Härtersystem (auch als Aktivatorsystem oder Initiatorsystem bezeichnet). Beispiele sind in EP 1 028 151 B1 (Poly(meth)acrylat / niedermolekulares Epoxidharz), EP 620 259 A1 (Polyester / niedermolekulares Epoxidharz), EP 721 975 (Polyolefin / niedermolekulares Epoxidharz) und DE 195 19 499 A1 (thermoplastisches Polyurethan / niedermolekulares Epoxidharz) zu finden.

Unter dem Begriff "härtbare Klebemasse" ist im Sinne dieser Erfindung eine Zubereitung zu verstehen, die funktionelle Gruppen enthält, die durch Einwirkung einer Härterkomponente in Kombination mit erhöhter Temperatur als zusätzlichem Stimulus an einer Reaktion teilnehmen kann, die zu einem Molmassenaufbau und/oder einer Quervernetzung zumindest eines Zubereitungsbestandteils führt.

Die Begriffe "Härter", "Initiator", "Aktivator" sind im Sinne dieser Erfindung synonym verwendet. Sie beschreiben Substanzen oder Substanzgemische, die eine Härtungsreaktion unter Beteiligung von Epoxid-Funktionalitäten in Kombination mit erhöhter Temperatur herbeiführen können.

Außerdem besteht bei härtbaren Klebesystemen, die in Form von Reaktivklebebändern zum Einsatz kommen sollen, üblicherweise die Notwendigkeit, eine ausreichende Lagerstabilität unter Lagerbedingungen zu gewährleisten, so dass das Reaktivklebeband auf unkomplizierte Weise transportiert und bevorratet werden kann, bevor die eigentliche Reaktivität dann erst im Aktivierungsschritt und unter Aktivierungsbedingungen zu Tage tritt / treten soll. Ohne solche Latenz ist die Praktikabilität genannter Klebebänder eingeschränkt. Obwohl viele Epoxidsysteme sich mit entsprechendem Härter durch UV-Strahlung härten lassen, so sind thermische Härtungsverfahren in vielen industriellen Verklebungsprozessen bevorzugt, da Strahlungsquellen nicht immer in Fertigungslinien integrierbar sind. Zudem ist in Schattenbereichen befindliche Klebemasse mittels Strahlung nicht so leicht aktivierbar. Strahlungshärtung in komplizierten Klebefugegeometrien ist also nicht universell möglich.

In diesen und anderen Fällen eignen sich insbesondere kationisch härtende Epoxid-Systeme und hier vor allem solche auf Basis (cyclo)aliphatischer Epoxide, die durch Aktivierung mittels eines säurebildenden Initiators entweder thermisch ("Thermal Acid Generator", TAG) und/oder unter Einwirkung ultravioletter Strahlung ("Photo Acid Generator", PAG) reagieren. (Cyclo)aliphatische Epoxide lassen sich mit diesen Initiatoren effizienter Härten als Glycidylether (J. V. Crivello, J. Polym. Sci. A Polym. Chem., 1999, 37, 4241-54). Für die Formulierung basierend auf (cyclo)aliphatischen Epoxiden, die sich für eine derartige Aktivierung besonders eignen, steht dem Fachmann allerdings bei weitem nicht

ein solcher Reichtum an verschiedenen Reaktivharzen zur Verfügung wie bei Glycidylether-basierenden Reaktivharzen. Die verfügbaren Reaktivharze auf Basis (cyclo)aliphatischer Epoxide liegen darüber hinaus niedermolekular vor, was zum Problem des Ausquetschens unter Heißverpressbedingungen führen kann, da die noch nicht umgesetzten niedermolekularen Reaktivharze als Weichmacher fungieren. Es werden daher Reaktivharze gesucht für Klebesysteme in Filmform, die die beschriebenen Nachteile nicht oder in reduzierter Form aufweisen.

### *Stand der Technik*

WO 98/21287 A1 beschreibt durch Strahlung härtbare Vorstufen für thermisch härtbare Klebesysteme enthaltend (a) einen strahlenhärtbaren Monomer-/Präpolymersirup, der vor allem als Poly(meth)acrylat-Komponente zu verstehen ist, (b) eine Epoxidharzkomponente, (c) eine Photoinitiatorkomponente und (d) einen nukleophilen thermischen Aktivator. Oligomere und polymere Epoxide können als Komponente (b) zum Einsatz kommen. Mit cycloaliphatischen Epoxiden funktionalisierte (Co)Polymere werden nicht explizit genannt. Cycloaliphatische Epoxide werden sogar grundsätzlich als wenig vorteilhaft beschrieben, siehe Seite 19, Zeile 2 der betreffenden Schrift. Härtung mittels TAG ist nicht vorgesehen.

US 4,552,604 A ist ein weiteres Beispiel für ein sogenanntes "dual cure" System, bei dem ein Poly(meth)acrylat durch Photopolymerisation unter Beisein eines Epoxid-Harzes aufgebaut wird. Die Photopolymerisation der flüssigen Zusammensetzung erfolgt auf einem Liner. Der photopolymerisierte Film wird für die Verklebung schließlich thermisch zur Härtung gebracht. Die Photopolymerisation wird genutzt, um eine polymere Matrix für die thermisch härtbare Epoxidkomponente zu bilden. Die Härtung mit Supersäure bildenden Initiatoren wird nicht genannt.

EP 914 027 A1 beschreibt ebenfalls härtbare Klebefolien, die ein Polyacrylat, eine Epoxid-Komponente und einen latenten Härter enthalten können. Das Polyacrylat kann geringe Anteile an Glycidyl(meth)acrylat enthalten.

WO 2013/101693 A1 offenbart thermisch härtbare Klebefilme, erzeugt aus einem Acrylatmonomergemisch, das mittels Photoinitiierung radikalisch polymerisiert wird, und einer Epoxid-Komponente. Epoxidfunktionalisierte (Meth)acrylat-Monomere sind nicht genannt.

WO 2015/048012 A1 beschreibt ein thermisch härtbares Haftklebesystem, das eine Polymethacrylat-Komponente enthält, die mit Benzoxazinen reagieren kann. Sie kann dazu u. a. Epoxid-Gruppen, bevorzugt über Glycidylmethacrylat als Comonomer ins Polymer eingebracht, enthalten. Der Beschreibung sind Glasübergangstemperaturen zu entnehmen, die über die sogenannte Fox-Gleichung (U. W. Gedde, Polymer Physics, 1999, Kluwer, Dortrecht, S. 70) berechnet werden. Die Fox-Gleichung erlaubt eine rechnerische Abschätzung der Glasübergangstemperatur einer homogenen Mischung und nutzt hierfür die Glasübergangstemperaturen der Ausgangskomponenten der Mischung, gewichtet über den jeweiligen Mischungsanteil dieser Komponenten. Die dort eingesetzten Grunddaten beziehen sich auf Glasübergangstemperaturen für hypothetische Homopolymere des entsprechenden Comonomers. Hierzu kann man sich Tabellenwerten bedienen, die für Homopolymere mit sehr hohen Molmassen, nämlich solchen, bei denen sich die Glasübergangstemperatur nicht mit dem Molekulargewicht ändert, gelistet sind. Die genannte Fox-Gleichung ist nicht zu verwechseln mit der sogenannten Fox-Flory-Beziehung (Gleichung G1), die den Einfluss der Polymermolmasse auf die Glasübergangstemperatur beschreibt. Bei den in der WO 2015/048012 A1 beschriebenen Polymeren kann daher von sehr hohen Molekulargewichten ausgegangen werden und die Nutzung von Polymeren mit geringerem Molekulargewicht wurde nicht in Erwägung gezogen.

WO 1999/057216 A1 offenbart Formulierungen enthaltend 20 bis 80 Gew.-% Ethylenvinylacetat-Copolymere und 20 bis 80 Gew.-% einer Epoxid-Komponente, die auch ein Polymerisat sein kann. Als konkretes Beispiel wird ein Polymer enthaltend Glycidylmethacrylat aufgeführt. Die beschriebenen Formulierungen werden photochemisch gehärtet. Polymere (cyclo)aliphatischer Epoxid substituierter (Meth)Acrylate sind nicht genannt Weitere Zusammensetzungen werden in WO-A-2014/059055, WO-A-2004/041943 und US-A-2007/026572 genannt.

### *Aufgabe*

Es besteht weiterhin Bedarf nach härtbaren Klebemassen für Reaktivklebebänder, die durch Aktivierung eine hohe Verklebungsfestigkeit aufbauen können und im Aktivierungsschritt eine möglichst geringe Ausquetschneigung, gleichzeitig aber unter Verpressbedingungen trotzdem ein sehr gutes Auffließverhalten aufweisen und damit hohe Verklebungsfestigkeiten erlauben. Um diese sich entgegenstehenden Anforderungen optimal auszubalancieren, ist daher ein Klebesystem mit besonders ausgewogenem viskoelastischem Verhalten gesucht. Wünschenswert ist zudem eine gute Widerstandsfähigkeit gegenüber Feucht/WärmeLagerung.

### *Lösung*

Die Aufgabe konnte gelöst werden durch eine härtbare Haftklebemasse enthaltend zumindest eine Sorte eines reaktiven (Co)Polymers mit einer Molmasse aus einem erfindungsgemäßen Molmassenbereich oberhalb einer minimalen Molmasse und unterhalb einer maximalen Molmasse. Der erfindungsgemäße Molmassenbereich oberhalb der minimalen Molmasse umfasst denjenigen Molmassenbereich, in dem die Glasübergangstemperatur des ungehärteten reaktiven (Co)Polymers von der Molmasse abhängt. Die Abhängigkeit zwischen Polymer-Molmasse, M, und Glasübergangstemperatur, $T_G$, an sich ist bekannt und näherungsweise durch die Fox-Flory-Beziehung

$$1/T_G = 1/T_G^{\infty} + const / M \qquad (G1)$$

beschrieben, wobei $T_G^{\infty}$ die Glasübergangstemperatur eines Polymers ist, bei der sich $T_G$ nicht mehr mit der Molmasse ändert, und const eine Polymertyp-abhängige Konstante (T. Fox, P. J. Flory, J. Polym. Sci., 1954, 14, 315-319). Es wurde nämlich gefunden, dass reaktive (Co)Polymere in ihrem ungehärteten Zustand in diesem Molmassenbereich ein ausgezeichnetes viskoelastisches Verhalten für einen Verpressprozess aufweisen, und zwar eine besonders vorteilhafte Balance aus gutem Auffließvermögen und reduziertem Ausquetschverhalten, für den Fall, dass die Verpresstemperatur oberhalb der Glasübergangstemperatur liegt. Die Reaktivität erlaubt darüber hinaus sehr gute Verklebungsfestigkeiten für die gehärtete Klebemasse. Da sich in dem erfindungsgemäßen Molmassenbereich die Glasübergangstemperatur mit der Molmasse ändert, steigt die Glasübergangstemperatur während der Härtungsreaktion an, was zu einem Anstieg in innerer Festigkeit des Klebesystems führt und zu belastbaren Verklebungszuständen.

Die Anforderungen an die erfindungsgemäße Klebemasse gelten als erfindungsgemäß besonders gut erfüllt, wenn zumindest eine, besser mindestens zwei, insbesondere alle drei der folgenden Bedingungen erfüllt sind:

- im Aktivierungsschritt eine möglichst geringe Ausquetschneigung gemäß Test A, nämlich weniger als 1,0 mm, bevorzugt weniger als 0,5 mm, sehr bevorzugt 0 mm
- und/oder hohe Verklebungsfestigkeiten, die eine Ausstoßfestigkeit nach Test B von mindestens 1,5 $N/mm^2$, bevorzugt von mindestens 2,5 $N/mm^2$, sehr bevorzugt von mindestens 3,5 $N/mm^2$ erlauben
- und/oder eine gute Widerstandsfähigkeit gegenüber Feucht/Wärme-Lagerung nach Test E von mindestens 1,5 $N/mm^2$, bevorzugt mindestens 2,5 $N/mm^2$, sehr bevorzugt mindestens 3,5 $N/mm^2$.

Die Erfindung betrifft dementsprechend thermisch härtbare Haftklebemassen, bestehend aus den folgenden Komponenten:

(A) 4,9 bis 34,9 Gew.-% (bezogen auf die Gesamtheit der härtbaren Klebemasse) eines epoxidfuntionalisierten (Co)Polymers mit einer gewichtsmittleren Molmasse im Bereich von 5 000 g/mol bis 200 000 g/mol, auf Basis von mehr als 30 bis 100 Gew.-%, bevorzugt 50 bis 100 Gew.-%, (bezogen auf die Gesamtheit der dem epoxidfuntionalisierten (Co)Polymer zugrundeliegenden Monomere) zumindest einer Sorte eines mit einer Epoxy-Gruppe funktionalisierten (meth)acrylischen (Co)Monomers (a),
(B) 0,1 bis 5 Gew.-% (bezogen auf die Gesamtheit der härtbaren Klebemasse) zumindest eines thermisch aktivierbaren Härters für eine kationische Härtung von Epoxiden,
(C) 65 bis 95 Gew.-% (bezogen auf die Gesamtheit der härtbaren Klebemasse) zumindest einer Sorte eines Matrixpolymers als Filmbildner wobei als Matrixpolymer thermoplastische Polyurethane eingesetzt werden,
(D) optional 0 bis 30 Gew.-% weiterer Bestandteile.

Die Angaben zu Molmassen beziehen sich auf die Messung mittels GPC gemäß Messmethode C.

Der Begriff "(Co)Polymer" wird im Sinne dieser Erfindung zusammenfassend für Homopolymere oder Copolymere verwendet. Sofern im Rahmen der Schrift von Polymeren gesprochen wird, sind damit (Co)Polymere gemeint, sofern sich aus dem jeweiligen Bezug nichts anderes ergibt.
Unter dem Begriff "(Co)poly(meth)acrylat" sind im Sinne dieser Erfindung Polyacrylat- und Polymethacrylat-Homopolymere oder Copolymere aus (meth)acrylischen Monomeren sowie gegebenenfalls weiteren copolymeriserbaren Comonomeren zu verstehen.
Mit dem Begriff "(Meth)Acrylate" und dem Adjektiv "(meth)acrylisch" werden zusammenfassend die Verbindungen aus der Gruppe aus Acrylsäurederivaten - wie insbesondere Acrylsäureester - und Methacrylsäurederivaten - wie insbesondere Methacrylsäureester - bezeichnet.
"(Co)Polymerisierbar" bedeutet im Sinne dieser Erfindung das Vermögen einer Monomersorte bzw. eines Gemischs zumindest zweier Monomersorten durch Molmassenaufbau ein (Co)Polymerisat zu bilden.

In bevorzugter Weise beträgt die gewichtsmittlere Molmasse des mit zumindest einer Gruppe eines Epoxids funktionalisierten (Co)Polymers (a) mindestens 10 000 g/mol, sehr bevorzugt mindestens 20 000 g/mol. Weiter bevorzugt beträgt die gewichtsmittlere Molmasse des mit zumindest einer Gruppe eines Epoxids funktionalisierten (Co)Polymers (a) höchstens 150 000 g/mol, sehr bevorzugt höchstens 100 000 g/mol.

Entsprechend des Anteils in der Gesamtheit der dem epoxidfunktionalisierten (Co)Polymer zugrundeliegenden

Monomere haben die mit einer Epoxy-Gruppe funktionalisierten (meth)acrylischen (Co)Monomere (a) einen (Co)Monomeranteil im epoxidfunktionalisierten (Co)Polymer von mehr als 30 bis 100 Gew-%, bevorzugt von mindestens 50 Gew.-%.

In bevorzugter Weise überbrückt das Epoxidsauerstoffatom in allen oder einigen der Epoxy-Gruppen in zumindest einem Teil der epoxidfunktionalisierten Monomere eine aliphatische C-C-Bindung (aliphatische Epoxygruppe). In weiter bevorzugter Weise überbrückt das Epoxidsauerstoffatom in allen oder einigen der Epoxy-Gruppen in zumindest einem Teil der epoxidfunktionalisierten Monomere eine C-C-Bindung, die Bestandteil eines - gegebenenfalls heterosubstituierten - aliphatischen Kohlenwasserstoffrings ist (cycloaliphatische Epoxygruppe).

In sehr bevorzugter Weise wird als mit einer Epoxy-Gruppe funktionalisiertes (meth)acrylisches (Co)Monomer (a) somit ein cycloaliphatisches Epoxid eingesetzt, beziehungsweise werden, wenn mehrere mit einer Epoxy-Gruppe funktionalisierten (meth)acrylischen (Co)Monomere (a) vorhanden sind, für eines, mehrere oder alle dieser mit einer Epoxy-Gruppe funktionalisierten (meth)acrylischen (Co)Monomere (a) cycloaliphatische Epoxide eingesetzt. Insbesondere vorteilhaft werden für mehr als 50 Gew.-% der (Co)Monnomere (a) cycloaliphatische Epoxide eingesetzt, besonders bevorzugt werden im Sinne der (Co)Monomere (a) ausschließlich cycloaliphatische Epoxide eingesetzt.

Die zumindest eine Sorte eines funktionalisierten (Co)Polymers kann optional Bausteine umfassen, die auf folgende Monomere zurückzuführen sind (wobei dann jedenfalls ein Copolymer vorliegt), wobei jede der nachfolgend genannten Monomersorten (b), (c) und (d) unabhängig von der Anwesenheit der jeweils anderen Monomersorten vorliegen kann:

(b) eine oder mehrere Sorten Comonomere mit einer Glasübergangstemperatur von mindestens 25 °C, insbesondere mindestens 50 °C,
mit einem Comonomeranteil im Copolymer von 0 Gew-% bis weniger als 70 Gew-%, bevorzugt bis höchstens 50 Gew.-%,
und/oder

(c) eine oder mehrere Sorten Comonomere mit einer Glasübergangstemperatur von unterhalb 25 °C, insbesondere höchstens 0 °C,
mit einem Comonomeranteil im Copolymer von 0 Gew.-% bis weniger als 70 Gew.-%, bevorzugt bis höchstens 50 Gew.-%,
und/oder

(d) eine oder mehrere Sorten Comonomere, die zumindest eine andere Funktionalität als eine Epoxy-Gruppe tragen, insbesondere eine Silizium-haltige Gruppe,
mit einem Comonomeranteil im Copolymer von 0 Gew.-% bis 10 Gew.-%, bevorzugt bis 5 Gew.-%,

Mit Monomeranteil bzw. (Co)Monomeranteil wird im Polymer im Rahmen dieser Schrift der Anteil der auf diese (Co)Monomere zurückzuführenden Wiederholungseinheiten (Bausteine) in dem betreffenden Polymer bezeichnet. Die Monomeranteile in der für die Herstellung des entsprechenden Copolymers zu polymerisierenden Polymermischung werden vorteilhaft entsprechend gewählt.

Angaben zu Glasübergangstemperaturen in dieser Schrift beziehen sich auf die Messung mittels DSC nach Methode D.

Der Anteil des funktionalisierten (Co)Polymers (A) in der Klebemasse beträgt mindestens 4,9 Gew.-% bis höchstens 34,9 Gew.-%, bevorzugt höchstens 19,9 Gew.-%, sehr bevorzugt bis 12,9 Gew.-%.

Die Glasübergangstemperatur des funktionalisierten (Co)Polymers (A) liegt bevorzugt bei mindestens 0 °C, sehr bevorzugt bei mindestens 25 °C, noch mehr bevorzugt bei mindestens 35 °C. Sie liegt vorzugsweise höchstens bei 100 °C, bevorzugter bei höchstens 80 °C. In alternativer Ausführung der Erfindung kann die Glasübergangstemperatur des funktionalisierten (Co)Polymers (A) aber auch unter 0 °C liegen.

Der Anteil an dem zumindest einen Härter (B) an der Klebemasse beträgt mindestens 0,1 Gew.-% bis zu höchstens 5 Gew.-%. Bevorzugt werden mindestens 0,3 Gew.-% bis 3 Gew.-%, bezogen auf die Gesamtformulierung der härtbaren Klebemasse.

Der Anteil an Matrixpolymer (C) an der Klebemasse beträgt mindestens 65 Gew.-% und höchstens 95 Gew.-%, bevorzugt mindestens 80 Gew.-% bis höchstens 95 Gew.-%, sehr bevorzugt mindestens 87 Gew.-% und höchstens 95 Gew.-%, jeweils bezogen auf die Gesamtformulierung der härtbaren Klebemasse.

Der Anteil an weiteren optionalen Bestandteilen (D) liegt, sofern solche zum Einsatz kommen und je nach deren Art, bei höchstens 30 Gew.-%, bevorzugt bei nicht mehr als 25 Gew.%, insbesondere bei nicht mehr als 15 Gew.-%. Denkbar sind auch höchstens 5 Gew.-%, jeweils in Bezug auf die Gesamtformulierung der härtbaren Klebemasse.

In bevorzugter Weise weist die härtbare Klebemasse im nicht gehärteten Zustand eine erste Glasübergangstemperatur auf, die unterhalb derjenigen Temperatur liegt, bei der der Klebeverbund bestehend aus Reaktivklebefilm und zu verklebenden Substraten durch Lamination erstellt wird, so dass die Formulierung unter den Laminierbedingungen unter Druck in einem definierten Zeitraum ein ausreichendes Benetzen auf dem Substrat / den Substraten erlaubt. Die für die Laminierung genutzte Temperatur wird im Sinne dieser Erfindung "Laminiertemperatur" genannt. Die Temperaturdifferenz zwischen der Laminiertemperatur und Glasübergangstemperatur liegt vorzugsweise bei mindestens 40 °C, insbesondere bei mindestens 70 °C oder sogar bei mindestens 100 °C, wobei die Laminiertemperatur oberhalb der Glasübergangstemperatur liegt. Die Laminiertemperatur liegt vorteilhaft zwischen 40 °C und 100 °C, insbesondere zwischen 50 °C und 80 °C. Sie liegt unterhalb der Aktivierungstemperatur, also derjenigen Temperatur, bei der die Härtung der härtbaren Klebemasse initiiert wird. Die Differenz zwischen Laminiertemperatur und Aktivierungstemperatur liegt vorteilhaft bei mindestens 20 °C, insbesondere bei mindestens 40 °C.

Weiter vorteilhaft weist auch bereits das (Co)Polymer (A) im nicht gehärteten Zustand eine erste Glasübergangstemperatur auf, die unterhalb derjenigen Temperatur liegt, bei der der Klebeverbund bestehend aus Klebefilm und zu verklebenden Substraten durch Lamination erstellt wird. Die Temperaturdifferenz zwischen der Laminiertemperatur und Glasübergangstemperatur des ungehärteten (Co)Polymers liegt in diesem Fall vorzugsweise bei mindestens 20 °C, insbesondere bei mindestens 40 °C, wobei die Laminiertemperatur oberhalb der Glasübergangstemperatur liegt.

Die Glasübergangstemperatur für die gehärtete Klebemasse dagegen liegt sehr bevorzugt um mindestens 40 °C, insbesondere um mindestens 100 °C höher als für das nicht gehärtete Klebesystem. Durch die hohe Anzahl an reaktiven Gruppen im (Co)Polymer (A) und gegebenenfalls in weiteren Bestandteilen (C) kann es möglich sein, dass eine Glasübergangstemperatur im gehärteten Zustand auf Grund des hohen Vernetzungsgrads nicht bestimmbar ist bzw. oberhalb der Zersetzungstemperatur liegt.

Weiter vorteilhaft liegt die Glasübergangstemperatur für das gehärtete (Co)Polymer (A) selbst um mindestens 40 °C, insbesondere um mindestens 100 °C höher als für das nicht gehärtete (Co)Polymer. Durch die hohe Anzahl an reaktiven Gruppen im (Co)Polymer (A) kann es möglich sein, dass eine Glasübergangstemperatur im gehärteten Zustand auf Grund des hohen Vernetzungsgrads nicht bestimmbar ist bzw. oberhalb der Zersetzungstemperatur liegt.

Die Titulierung "gehärtetes System" oder "gehärtete Klebemasse" bedeutet im Sinne dieser Erfindung, dass die Klebemasse mit dem funktionalisierten (Co)Polymer (A) durch Einwirkung der Härter-Komponente und erhöhter Temperatur als weiterem Stimulus aktiviert wurde und eine Reaktion unter Beteiligung der funktionellen Gruppen des (Co)Polymers (A) stattgefunden hat. Es brauchen aber nicht alle funktionellen Gruppen, die chemisch an der Härtungsreaktion teilnehmen können, reagiert zu haben. Vielmehr kann auch ein Umsatz von 50 % der funktionellen Gruppen bereits eine ausreichend hohe Glasübergangstemperatur mit sich bringen und für die Verklebungsanwendung sehr gut geeignet sein. Ein Umsatz von 50 % ist hier beispielhaft genannt. Ebenso kann die gemachte Aussage auch auf höhere Umsätze wie 60 %, 70 %, 80 %, 90 % oder 100 % oder sogar niedrigere Umsätze wie 40 % oder 30 % gelten. Entscheidend ist, dass die Verklebungseigenschaften nach durchgeführter Härtung anwendungsgerecht sind, wie dies insbesondere in den weiter hinten aufgeführten Tabellen 1 und 2 angegeben ist.

Die Klebemasse ist unter Standardbedingungen (23 °C, 50 % rel. Luftfeuchtigkeit) haftklebrig sein. Sie weist dann im nicht gehärteten Zustand eine Glasübergangstemperatur von unter 0 °C, vorzugsweise von höchstens -25 °C auf. Diese Charakteristik vereinfacht Konfektionierprozesse wie die Vordimensionierung von Klebebandabschnitten für den späteren Verklebungsprozess oder auch Laminierschritte bei der Herstellung von Klebeproduktaufbauten und Bauteilverklebung. Im Laminierprozess braucht in diesem Fall nicht unbedingt mit erhöhter Temperatur gearbeitet zu werden sondern kann bei Raumtemperatur laminiert werden, da bereits über den Laminationsdruck ein ausreichender Kontakt zwischen Klebmasse und den zu verklebenden Substraten realisiert werden kann.

Unter dem Begriff "Haftklebemasse" beziehungsweise "haftklebrige Klebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen - bei der Anwendungstemperatur (sofern nicht anders definiert, bei Raumtemperatur, also 23 °C) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können.

Die Klebemasse kann unter Standardbedingungen (23 °C, 50 % rel. Luftfeuchtigkeit) aber auch nicht oder nur gering haftklebrig sein. Um dies einzustellen, kann sie dann im nicht gehärteten Zustand eine Glasübergangstemperatur von mindestens 0 °C, vorzugsweise von mindestens 25 °C aufweisen. Sie kann auch, insbesondere wenn semikristalline Polymere für Matrixpolymere (C) verwendet werden, deutlich niedriger liegen (z. B. -25 °C oder darunter) Diese Charakteristik erlaubt ein vorteilhaftes Platzieren der Klebeprodukte im Verklebungsprozess und kein vorzeitiges Anhaften an eine Oberfläche in falscher Position. Darüber hinaus zeigt sich diese Charakteristik vorteilhaft für latentreaktive Klebesysteme, da etwaige Reaktivität im glasigen / zähelastischen Zustand signifikant (kinetisch) herabgesetzt ist und man dadurch eine verbesserte Latenz erreicht. Für den Laminierprozess ist dann neben Druck aber auch eine erhöhte Temperatur erforderlich.

Bei Applikation, insbesondere Lamination unter Erwärmung und Verpressung, erweicht das Klebesystem, nimmt in seinem Benetzungsverhalten zu und kann dadurch zu den zu verklebenden Substraten Kontakt ausbilden. In diesem Zusammenhang ist die Molmasse des erfindungsgemäßen funktionalisierten (Co)Polymers (A) von zentraler

Bedeutung, da sie bei gegebener Zusammensetzung die viskoelastischen Eigenschaften der Schmelze und hier insbesondere die Schmelzviskosität mit beeinflusst. Je höher die Molmasse, desto ausgeprägter wirken sich Verschlaufungen als temporäre Vernetzungspunkte auf das viskoelastische Verhalten aus. Liegt die Molmasse des erfindungsgemäßen funktionalisierten (Co)Polymers (A) unterhalb seines Verschlaufungsmolekulargewichts, sind entsprechende diese (Co)Polymere enthaltende Klebemassen unter Verpressbedingungen, also oberhalb der Glasübergangstemperatur, sehr fließfähig und bergen die Gefahr zu starken Ausquetschverhaltens. Liegt die Molmasse dagegen zu hoch, nämlich im Molmassenbereich, in dem sich die Glasübergangstemperatur nicht mehr mit der Molmasse ändert, ist das Polymer bereits zu stark verschlauft, wodurch das Fließverhalten reduziert wird, dass unter Verpressbedingungen kein gutes Auffließen der Klebemasse mehr gewährleistet ist. Diese Ausführung möge die erfinderische Idee veranschaulichen, eine Molmasse im erfindungsgemäßen Molmassenbereich für (Co)Polymere (A) auszuwählen.

Das erfindungsgemäße funktionalisierte (Co)Polymer (A) bietet zudem einen weiteren Vorteil. Die Erfindung macht sich nämlich die Erkenntnis zu Nutze, dass ein Reaktivsystem im Verklebungsschritt, bei dem Ausquetschen auftreten kann, durch Aktivierung der Härtungsreaktion einen Aufbau an Molekulargewicht durchläuft. Dabei finden zwei Prozesse statt, Kettenwachstum und Quervernetzung. Beide Prozesse sind kinetisch kontrolliert und benötigen Zeit. Kommt unter Verklebungsbedingungen Wärme zum Einsatz, dann wird die Viskosität des Systems entsprechend ihrer Temperaturabhängigkeit reduziert, was zu Ausquetschen führen kann. Erfolgt der Molekulargewichtsaufbau nicht rasch genug, kann er durch die Molmassenabhängigkeit der Viskosität, die der Temperaturabhängigkeit der Viskosität prinzipiell entgegenwirkt, nicht den durch Wärmeeintrag bedingten Viskositätsabfall kompensieren. Die Folge ist unerwünschtes Ausquetschen von Klebematerial und ein unsauberes Verklebungsresultat.

Erfindungsgemäße (Co)Polymere (A) weisen aber bereits eine Basismolmasse auf, so dass zumindest ein erster Schritt des Kettenwachstums bereits vor der Aktivierung erfolgt ist und lediglich eine Quervernetzung zum Aufbau von Kohäsion ablaufen braucht. Weiterer Molmassenaufbau läuft nach der Aktivierung natürlich auch ab und führt zusammen mit der Quervernetzung zu vorteilhaften Verklebungsergebnissen.

Im Folgenden werden die einzelnen Bestandteile erfindungsgemäßer Klebemassen genauer beschrieben, wobei die Aufzählungen als Beispiele zu verstehen sind.

(Co)Polymer(A)

(Co)Monomere (a)

Für die (Co)Monomere (a) werden Monomere der Formel (I)

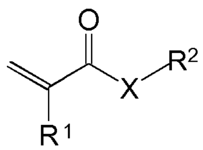

(I)

verwendet, wobei $-R^1$ gleich -H oder $-CH_3$, -X- gleich $-N(R^3)-$ oder-O- , $-R^3$ gleich -H oder $-CH_3$ und $-R^2$ eine Epoxyfunktionalisierte (Hetero)hydrocarbylgruppe darstellen.

Weiter bevorzugt umfasst die Gruppe $R^2$ lineare, verzweigte, cyclische oder polycyclische Kohlenwasserstoffe mit 2 bis 30 Kohlenstoffatomen, welche mit einer Epoxygruppe funktionalisiert sind. Besonders bevorzugte Vertreter dieser Gruppe sind 3,4-Epoxycyclohexyl-substituierte Monomere wie beispielsweise 3,4-Epoxycyclohexylmethylmethacrylat, 3,4-Epoxycyclohexylmethylacrylat, 3,4-Epoxycyclohexylmethacrylat, 3,4-Epoxycyclohexylacrylat. Weniger bevorzugte, aber von der Erfindung dennoch umfasste Co(Monomere) (a) sind Glycidylgruppen-haltige (Co)Monomere wie Glycidylacrylat oder Glycidylmethacrylat. Die Härtungseigenschaften der Oxiraneinheiten in Glycidylgruppen unterscheiden sich insbesondere bei kationischer Härtung jedoch von denen (cyclo)aliphatischer Epoxide. Zudem enthalten Glycidylether-basierende Systeme aus Gründen ihrer Herstellprozesse meistens Resthalogen. Die erfindungsgemäßen Klebemassen weisen aber bevorzugt einen sehr niedrigen Halogengehalt (< 1000 ppm, bevorzugt sogar < 100 ppm), insbesondere bezogen auf Chlor und Brom, auf.

Comonomere (b)

Comonomere (b) weisen insbesondere keine Epoxy-Gruppen auf. Im Sinne der Comonomere (b) sind alle dem Fachmann bekannten - insbesondree epoxygruppenfreie - (Meth)AcrylatMonomere und andere copolymerisierbaren Vinylmonomere einsetzbar, die mit (Co)Monomeren (a) und gegebenenfalls vorhandenen Comonomeren (c) und/oder (d) copolymerisierbar sind und die eine Glasübergangstemperatur als hypothetisches Homopolymer (in diesem Zusammenhang ist die Glasübergangstemperatur des Homopolymeren aus den entsprechenden Monomeren im molmasse-

nunabhängigen Glasübergangstemperaturbereich, $T_G^\infty$, gemeint) von mindestens 25 °C, insbesondere mindestens 50 °C. Solche Monomere werden im Rahmen dieser Schrift auch als "harte Monomere" bezeichnet. Zur Auswahl solcher Comonomere kann z. B. das Polymer Handbook (J. Brandrup, E. H. Immergut, E. A. Grulke (Hrsg.), 4. Aufl., 1999, J. Wiley, Hoboken, Bd. 1, Kapitel VI/193) konsultiert werden. Vorteilhaft einsetzbar sind auch sogenannte Makromere nach WO 2015/082143 A1. Bevorzugt werden Comonomere, die durch ihre chemische Bauart im Wesentlichen vor der Initiierung der Härtungsreaktion keine Reaktivität mit den Epoxid-Funktionalitäten der (Co)Monomere (a) aufweisen oder initiierend oder katalysierend in Bezug auf eine Reaktion der Epoxid-Funktionalitäten wirken oder ihre Reaktivität mit Epoxid-Funktionalitäten anderweitig unterbunden ist.

Comonomere (c)

Comonomere (c) weisen insbesondere keine Epoxy-Gruppen auf. Im Sinne der Comonomere (c) sind alle dem Fachmann bekannten - insbesondere epoxygruppenfreie - (Meth)AcrylatMonomere und andere copolymerisierbare Vinylmonomere einsetzbar, die mit (Co)Monomeren (a) und gegebenenfalls vorhandenen Comonomeren (b) und/oder (d) copolymerisierbar sind, und die eine Glasübergangstemperatur als hypothetisches Homopolymer (in diesem Zusammenhang ist die Glasübergangstemperatur des Homopolymeren aus den entsprechenden Monomeren im molmassenunabhängigen Glasübergangstemperaturbereich, $T_G^\infty$, gemeint) von unterhalb 25 °C, insbesondere höchstens 0 °C besitzen. Solche Monomere werden im Rahmen dieser Schrift auch als "weiche Monomere" bezeichnet. Zur Auswahl solcher Comonomere kann beispielweise das Polymer Handbook (J. Brandrup, E. H. Immergut, E. A. Grulke (Hrsg.), 4. Aufl., 1999, J. Wiley, Hoboken, Bd. 1, Kapitel VI/193) konsultiert werden. Vorteilhaft einsetzbar sind auch sogenannte Makromere nach WO 2015/082143 A1. Bevorzugt werden Comonomere, die durch ihre chemische Bauart vor der Initiierung der Härtungsreaktion im Wesentlichem nicht initiierend oder katalysierend in Bezug auf eine Reaktion der Epoxid-Funktionalitäten wirken, insbesondere die keine Reaktivität mit den Epoxid-Funktionalitäten der (Co)Monomere (a) aufweisen und/oder deren Reaktivität mit Epoxid-Funktionalitäten anderweitig unterbunden ist.

Comonomere (d)

Im Sinne der Comonomere (d) kommen insbesondere solche Monomere zum Einsatz, die mit (Co)Monomeren (a) und gegebenenfalls vorhandenen Comonomeren (b) und/oder (c) copolymerisierbar sind und die die adhäsiven Eigenschaften des erfindungsgemäßen Copolymers optimieren. In diesem Zusammenhang sind insbesondere Siliziumhaltige Comonomere und hier acrylierte oder methacrylierte Alkoxysilan-haltige Comonomere als vorteilhaft zu nennen. Beispiele sind 3-(Triethoxysilyl)propylmethacrylat, 3-(Triethoxysilyl)-propylacrylat, 3-(Trimethoxysilyl)propylacrylat, 3-(Trimethoxysilyl)propylmethacrylat, Methacryl-oxymethyltriethoxysilan, (Methacryloxymethyl)trimethoxysilan, (3-Acryloxypropyl)methyl-dimethoxysilan, (Methacryloxymethyl)methyldimethoxysilan, γ-Methacryloxypropylmethyl-dimethoxysilan, Methacryloxypropylmethyldiethoxysilan, 3-(Dimethoxymethylsilyl)propyl-methacrylat, Methacryloxypropyldimethylethoxysilan, Methacryloxypropyldimethylmethoxysilan. Von den vorgenannten Verbindungen sind 3-(Triethoxysilyl)propylmethacrylat, 3-(Triethoxysilyl)-propylacrylat, 3-(Trimethoxysilyl)propylacrylat und 3-(Trimethoxysilyl)propylmethacrylat besonders bevorzugt. Auch die Comonomere (d) weisen bevorzugt keine Epoxy-Gruppen auf.

## Herstellung

Die Herstellung der (Co)Polymere (A) erfolgt durch (Co)Polymerisation der zugrundeliegenden (Co)Monomere und kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (zum Beispiel Hexan, Heptan, Octan, Isooctan, Isohexan, Cyclohexan), aromatische Kohlenwasserstoffe (zum Beispiel Benzol, Toluol, Xylol), Ester (zum Beispiel Essigsäureethylester, Essigsäurepropyl-, -butyl- oder -hexylester), halogenierte Kohlenwasserstoffe (zum Beispiel Chlorbenzol), Alkanole (zum Beispiel Methanol, Ethanol, Ethylenglycol, Ethylenglycolmonomethylether), Ketone (z. B. Aceton, Butanon) und Ether (zum Beispiel Diethylether, Dibutylether) oder Gemische davon. Es wird auf Verbindungen verzichtet, die mit Epoxid-Funktionalitäten vor der Initiierung der Härtungsreaktion reagieren können oder die Reaktion von Epoxid-Funktionalitäten initiieren oder katalysieren können oder ihre Reaktivität mit Epoxid-Funktionalitäten anderweitig unterbunden ist.

Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Polyethylenglycolen, Polypropylenglycolen, Estern, Alkoholderivaten, Hydroxyetherderivaten, Ketonen und dergleichen, sowie Derivaten und Gemischen davon. Es wird auf Verbindungen verzichtet, die mit Epoxid-Funktionalitäten reagieren können

und/oder die die Reaktion von Epoxid-Funktionalitäten initiieren oder katalysieren können und/oder deren Reaktivität mit Epoxid-Funktionalitäten nicht anderweitig unterbunden ist.

Zur Herstellung der erfindungsgemäßen funktionalisierten (Co)Polymere werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die radikalische Initiatoren zur Polymerisation (Polymerisationsinitiatoren) enthalten, insbesondere thermisch zerfallende radikalbildende Azo- oder Peroxoinitiatoren. Prinzipiell eignen sich jedoch alle für Acrylate und/oder Methacrylate dem Fachmann geläufigen, üblichen Polymerisationsinitiatoren. Die Produktion von C-zentrierten Radikalen ist im Houben-Weyl, Methoden der Organischen Chemie, Vol. E 19a, S. 60-147, beschrieben. Diese Methoden werden in bevorzugter Weise in Analogie angewendet.

Die im Zusammenhang mit der Herstellung der (Co)polymere (A) genannten radikalischen Polymerisationsinitiatoren sind nicht zu verwechseln mit den für die Härtung der härtbaren Klebemasse zum Einsatz kommenden Härtern beziehungsweise Aktivatoren.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-tert-butylperoxid, Azobisiisobutyronitril, Cyclohexylsulfonylacetylperoxid, Diisopropylpercarbonat, tert-Butylperoktoat, Benzpinacol. Besonders bevorzugt wird als radikalischer Polymerisationsinitiator 2,2'-Azobis(2-methylbutyronitril) oder 2,2-Azobis-(2,4-dimethylvaleronitril) verwendet.

Die Polymerisationszeit beträgt - je nach Temperatur und gewünschtem Umsatz - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Polymerisationsinitiatoren der Eintrag von Wärme essentiell. Die Polymerisation kann für die thermisch zerfallenden Poylymerisationsinitiatoren durch Erwärmen auf 50 °C oder mehr, je nach Initiatortyp, initiiert werden. Bevorzugt wird eine Initiierungstemperatur von höchstens 100 °C, sehr bevorzugt von höchstens 80 °C.

Zur Radikalstabilisierung werden in günstiger Vorgehensweise Nitroxide eingesetzt, wie z. B. (2,2,5,5-Tetramethyl-1-pyrrolidinyl)oxyl (PROXYL), (2,2,6,6-Tetramethyl-1-piperidinyl)oxyl (TEMPO), Derivate des PROXYLs oder des TEMPOs und weitere dem Fachmann geläufige Nitroxide.

Eine Reihe weiterer Polymerisationsmethoden, nach denen die Klebemassen in alternativer Vorgehensweise hergestellt werden können, lassen sich aus dem Stand der Technik wählen: WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen.

Als weitere kontrollierte Polymerisationsmethode lässt sich die Atom Transfer Radical Polymerization (ATRP) einsetzen, wobei als Polymerisationsinitiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden. Die unterschiedlichen Möglichkeiten der ATRP sind ferner in den Schriften der US 5,945,491 A, der US 5,854,364 A und der US 5,789,487 A beschrieben.

Als weiterer Herstellprozess wird eine Variante der RAFT-Polymerisation (reversible additionfragmentation chain transfer polymerization) durchgeführt. Der Polymerisationsprozess ist z. B. in den Schriften WO 98/01478 A1 und WO 99/31144 A1 ausführlich beschrieben. Zur Herstellung eignen sich besonders vorteilhaft Trithiocarbonate der allgemeinen Struktur R'''-S-C(S)-S-R''' (Macromolecules, 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättigter aliphatischer Rest sein kann. Der Phenylring Φ kann optional einen oder mehrere Polymerblöcke, beispielsweise Polybutadien, Polyisopren oder Polystyrol tragen, um nur einige zu nennen. Funktionalisierungen können beispielsweise Halogene, Hydroxygruppen, Epoxidgruppen sein, ohne dass diese Aufzählung Anspruch auf Vollständigkeit erhebt.

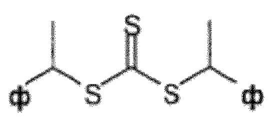

(TTC 1)

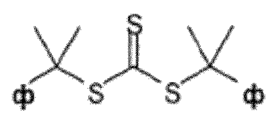

(TTC 2)

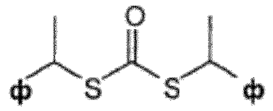

(THI 1)

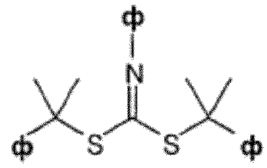

(THI 2)

In Verbindung mit den oben genannten kontrolliert radikalisch verlaufenden Polymerisationen werden Polymerisationsinitiatorsysteme bevorzugt, die radikalische Polymerisationsinitiatoren enthalten, insbesondere die schon zuvor aufgezählten thermisch zerfallenden radikalbildenden Azo- oder Peroxoinitiatoren. Prinzipiell eignen sich hierfür jedoch alle für Acrylate und/oder Methacrylate bekannten üblichen Polymerisationsinitiatoren. Weiterhin können auch Radikalquellen verwendet werden, die erst unter UV-Bestrahlung Radikale freisetzen. Maßgeblich ist, dass diese Polymerisationsinitiatoren keine Reaktion der Epoxid-Funktionalitäten aktivieren können.

Zum Zwecke der Molmasseneinstellung können auch Kettenübertragungsreagenzien nach dem Stand der Technik verwendet werden, sofern sie keine Reaktivität gegenüber Epoxidgruppen aufweisen oder ihre Reaktivität mit Epoxidgruppen anderweitig unterbunden ist.

Die gewünschte Molmasse wird bevorzugt durch Polymerisationsverfahren, seien es kontrollierte Polymerisationsverfahren oder nicht kontrollierte Polymerisationsverfahren, eingestellt, bei denen keine Mittel eingesetzt werden, die vor der Initiierung der Härtungsreaktion des Klebefilms mit Epoxid-Funktionalitäten reagieren können oder die Reaktion von Epoxid-Funktionalitäten initiieren oder katalysieren können oder ihre Reaktivität mit Epoxid-Funktionalitäten anderweitig unterbunden ist.

Die Einstellung der gewünschten Molmasse kann zudem und zwar besonders bevorzugt über das Einsatzverhältnis von Polymerisationsinitiatoren und (Co)Monomer(en) und/oder die Konzentration an (Co)Monomeren realisiert werden.

Härter (B)

Erfindungsgemäße Klebemassen enthalten zumindest eine Sorte eines Härters. Die Härter werden so ausgewählt, dass die resultierende Formulierung eine möglichst ausgeprägte Latenz in ihrer Reaktivität aufweist. Das heißt, dass das Klebesystem bzw. der auf ihm basierende Klebefilm unter bestimmten Bedingungen - wie zum Beispiel bei Raumtemperatur oder auch leicht erhöhten Temperaturen wie 35 °C oder sogar 50 °C - im Wesentlichen keine oder sogar gar keine Reaktion zeigt. Die Reaktion folgt auf einen Aktivierungsimpuls, der durch erhöhte Temperatur ausgelöst werden kann. Im Sinne dieser Erfindung wird Latenz über die Aktivierungstemperatur, die über ein DSC-Experiment ermittelt werden kann, definiert (Test F). Die so ermittelte Aktivierungstemperatur liegt für erfindungsgemäße Härter bei mindestens 60 °C, bevorzugt bei mindestens 75 °C, sehr bevorzugt bei mindestens 90 °C. Sie liegt höchstens bei 150 °C, bevorzugt bei höchstens 120 °C.

Als Beispiele für in diesem Sinne besonders geeignete Härter seien thermisch aktivierbare Säurebildner, TAG, genannt. Durch Wärmeeinfluss wird aus der Initiatorsubstanz eine starke Säure, die sogenannte Supersäure, gebildet, die eine Ringöffnung der Epoxid-Gruppen bewirken kann. Im Sinne der vorliegenden Erfindung einsetzbare thermisch aktivierbare Härter für eine kationische Härtung von Epoxid-Gruppen sind insbesondere Pyridinium-, Ammonium-(insbesondere Anilinium-) und Sulfonium- (insbesondere Thiolanium-)-Salze sowie Lanthanoidtriflate.

Sehr vorteilhaft sind N-Benzylpyridinium-Salze und Benzylpyridinium-Salze, wobei Aromaten zum Beispiel mit Alkyl- Alkoxy-, Halogen- oder Cyano-Gruppen substituiert sein können.

J. Polym. Sci. A, 1995, 33, 505ff, US 2014/0367670 A1, US 5,242,715, J. Polym. Sci. B, 2001, 39, 2397ff, EP 393893 A1, Macromolecules, 1990, 23, 431ff, Macromolecules, 1991, 24, 2689, Macromol. Chem. Phys., 2001, 202, 2554ff, WO 2013/156509 A2 und JP 2014/062057 A1. nennen entsprechende Verbindungen, die im Sinne dieser Erfindung einsetzbar sind.

Von den kommerziell erhältlichen Härtersystemen seien als Beispiele für sehr vorteilhaft einsetzbare Verbindungen San-Aid SI 80 L, San-Aid SI 100 L, San-Aid SI 110 L, San-Aid SI B2A, San-Aid SI B3, San-Aid SI B3A und San-Aid SI B4 der Firma Sanshin, Opton CP-66 und Opton CP-77 der Firma Adeka und K-Pure TAG 2678, K-Pure CXC 1612 und K-Pure CXC 1614, K-Pure CXC 1615, K-Pure CXC 1821 der Firma King Industries genannt.

Einsetzbar sind zudem Lanthanoidtriflate wie Samarium-III-Triflat, Ytterbium-III-Triflat, Erbium-III-Triflat oder Dysprosium-III-Triflat (erhältlich bei Sigma Aldrich) und Lanthan-III-Triflat (erhältlich bei Alfa Aesar).

Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amid und Tris-(trifluoromethylsulfonyl)-methid genannt. Zudem einsetzbar sind Anionen nach JP 2012-056915 A1 und EP 393893 A1. Härter, die im Wesentlichen frei von Chlor und Brom sind, werden bevorzugt. Das Anion ist bevorzugt Arsenat- und Antimonat-frei.

Dem Fachmann sind weitere Systeme bekannt, die ebenfalls erfindungsgemäß einsetzbar sind. Latentreaktive thermisch aktivierbare Härter für die kationische Härtung werden unkombiniert oder als Kombination von zwei oder mehreren thermisch aktivierbaren Härtern eingesetzt.

Im Sinne der vorliegenden Erfindung vorteilhafte Aktivierungstemperaturen, also solche Temperaturen, bei denen die kationische Härtung der funktionalisierten (Co)Polymere gestartet werden kann, liegen bei mindestens 60 °C, bevorzugt bei mindestens 75 °C, weiter bevorzugt bei mindestens 90 °C. Härtung / Initiierung in diesen Temperaturbereichen wird bevorzugt, um thermisch empfindliche Substrate nicht thermisch zu schädigen. Bei thermisch beständigeren Substraten sind auch höhere Härtungstemperaturen z. B. bei 120 °C, 150 °C, 180 °C, 200 °C oder noch höher denkbar und für manche Verklebungsaufgaben sogar bevorzugt. Die Härtungsdauer kann dabei bei 15 min oder mehr und 2 h oder weniger liegen, auch wenn deutlich kürzere (wie 10 s, 30 s, 60 s, 120 s, 240 s, 5 min oder 10 min) oder noch längere Härtungszeiten nicht ausgeschlossen sind.

Matrixpolymer (C)

Die Filmbildner für erfindungsgemäße Klebemassen sind thermoplastische Polyurethane. Sie werden insbesondere so ausgewählt, dass sie in Kombination mit den weiteren Formulierungsbestandteilen solche Klebemassen zugänglich machen, die vorteilhaft im Hinblick auf Verarbeitbarkeit beim Klebebandhersteller einerseits und Klebebandanwender andererseits, im Hinblick auf klebtechnische Eigenschaften und im Hinblick auf weitere Verbesserung der Dimensionsstabilität der Klebefilme in Bezug auf die Darreichung des Klebeprodukts und das Ausquetschverhalten im Heißlaminierprozess, um nur einige besonders wichtige Anforderungen zu nennen, sind.

Polyurethane sind chemisch und/oder physikalisch vernetzte Polykondensate, die typischerweise aus Polyolen und Isocyanaten aufgebaut werden und Weich- und Hartsegmente enthalten. Die Weichsegmente bestehen beispielsweise aus Polyestern, Polyethern, Polycarbonaten, im Sinne dieser Erfindung jeweils bevorzugt aliphatischer Natur, und Polyisocyanathartsegmenten. Je nach Art und Einsatzverhältnis der einzelnen Komponenten sind Materialien erhältlich, die im Sinne dieser Erfindung vorteilhaft eingesetzt werden können. Rohstoffe, die dem Formulierer hierzu zur Verfügung stehen, sind zum Beispiel in EP 894 841 B1 und EP 1 308 492 B1 genannt.

Weitere optionale Bestandteile (D)

Den erfindungsgemäßen Klebemassen können optional weitere Bestandteile zugefügt werden, die die Eigenschaften des Klebesystems wunschgemäß einstellen. In diesem Zusammenhang seien Klebharze (D1: typischerweise bis zu 25 Gew.-% bezogen auf die Gesamtformulierung), niederviskose Reaktivharze (D2: typischerweise bis zu 15 Gew.-% bezogen auf die Gesamtformulierung) und weitere Zuschlagsstoffe oder Additive (D3: typischerweise bis zu 10 Gew.-% bezogen auf die Gesamtformulierung) genannt.

(D1) Klebharze

Die erfindungsgemäße Klebemasse enthält optional eine oder mehrere Sorten eines Klebharzes, vorteilhaft solche, die mit dem (Co)Polymer (A) und/oder dem Matrixpolymer (C) verträglich sind.

Es ist vorteilhaft, wenn dieses Klebharz eine Klebharzerweichungstemperatur (ASTM E28) von größer 25 °C, insbesondere von größer 80 °C aufweist.

Als Klebharze (D1) können in der Klebemasse zum Beispiel partiell oder vollständig hydrierte oder disproportionierte Harze auf Basis von Kolophonium und Kolophoniumderivaten, Inden-Coumaron-Harze, Terpen-Phenolharze, Phenolharze, hydrierte Polymerisate des Dicyclopentadiens, partiell, selektiv oder vollständig hydrierte Kohlenwasserstoffharze auf Basis von C5-, C5/C9- oder C9-Monomerströmen, Polyterpenharze auf Basis von $\alpha$-Pinen und/oder $\beta$-Pinen und/oder $\delta$-Limonen, hydrierte Polymerisate von bevorzugt reinen C8- und C9-Aromaten eingesetzt werden. Vorgenannte Klebharze können sowohl allein als auch im Gemisch eingesetzt werden.

Um eine hohe Alterungs- und UV-Stabilität zu gewährleisten, sind hydrierte Harze mit einem Hydrierungsgrad von mindestens 90 %, vorzugsweise von mindestens 95 % bevorzugt.

Des Weiteren sind insbesondere in Kombination mit unpolaren Filmbildnern unpolare Harze mit einem DACP-Wert (diacetone alcohol cloud point) oberhalb von 30 °C und einem MMAP-Wert (mixed methylcylohexane aniline point) von größer 50 °C, insbesondere mit einem DACP-Wert oberhalb von 37 °C und einem MMAP-Wert größer 60 °C bevorzugt. Der DACP-Wert und der MMAP-Wert geben jeweils die Löslichkeit in einem bestimmten Lösemittelgemisch an. Zur Definition und Bestimmung des DACP- und MMAP-Werts sei auf C. Donker, PSTC Annual Technical Proceedings, S. 149-164, Mai 2001 verwiesen. Bzgl. MMAP kann auch ASTM C611 konsultiert werden.

(D2) niederviskose Reaktivharze

Optional aber vorteilhaft können niedermolekulare Reaktivharze eingesetzt werden. Sie kommen bevorzugt zu einem Anteil in der Gesamtformulierung von höchstens 15 Gew.-%, bevorzugt von höchstens 10 Gew.-% zum Einsatz. Bei diesen niederviskosen Reaktivharzen handelt es sich insbesondere um cyclische Ether, also Verbindungen, die zumindest eine Oxiran-Gruppe tragen, oder Oxetane. Sie können aromatischer oder insbesondere aliphatischer oder cycloaliphatischer Natur sein. Einsetzbare Reaktivharze können monofunktionell, difunktionell, trifunktionell, tetrafunktionell oder höher funktionell bis zu polyfunktionell gestaltet sein, wobei sich die Funktionalität auf die cyclische Ethergruppe bezieht.

Beispiele, ohne sich einschränken zu wollen, sind 3,4-Epoxycyclohexylmethyl-3',4'-epoxycyclohexancarboxylat (EEC) und Derivate, Dicyclopendadiendioxid und Derivate, 3-Ethyl-3-oxetanmethanol und Derivate, Tetrahydrophthalsäurediglycidylester und Derivate, Hexahydrophthalsäurediglycidylester und Derivate, 1,2-Ethandiglycidylether und Derivate, 1,3-Propandiglycidylether und Derivate, 1,4-Butandioldiglycidylether und Derivate, höhere 1,n-Alkandiglycidylether und Derivate, Bis-[(3,4-epoxycyclohexyl)methyl]-adipat und Derivate, Vinylcyclohexyldioxid und Derivate, 1,4-Cyclohexandimethanol-bis-(3,4-epoxycyclohexancarboxylat) und Derivate, 4,5-Epoxytetrahydrophthalsäurediglycidylester und Derivate, Bis-[1-ethyl(3-oxetanyl)methyl)ether und Derivate, Pentaerythritoltetraglycidylether und Derivate, Bisphenol-A-Digylcidylether (DGEBA), hydriertes Bisphenol-A-Diglycidylether, Bisphenol-F-Diglycidylether, hydriertes Bisphenol-F-Diglycidylether, Epoxyphenol-Novolaks, hydrierte Epoxyphenol-Novolaks, Epoxycresol-Novolaks, hydrierte Epoxycresol-Novolaks, 2-(7-Oxabicyclospiro(1,3-dioxan-5,3'-(7-oxabicyclo[4.1.0]-heptan)), 1,4-Bis((2,3-epoxypropoxy)methyl)cyclohexan. Auch hier werden (cyclo)aliphatische Epoxide bevorzugt. Verbindungen nach WO 2013/156509 A2 können als Reaktivharze ebenfalls im Sinne dieser Erfindung eingesetzt werden.

Reaktivharze können in ihrer monomeren oder auch dimeren, trimeren, usw. bis hin zu ihrer oligomeren Form eingesetzt werden, insbesondere sofern das gewichtsmittlere Molekulargewicht 5 000 g/mol nicht erreicht.

Gemische von Reaktivharzen untereinander aber auch mit anderen coreaktiven Verbindungen wie Alkoholen (monofunktionell oder mehrfach funktionell) oder Vinylethern (monofunktionell oder mehrfach funktionell) sind ebenfalls möglich.

Als weitere optionale Bestandteile (D) können als Additive der Klebemasse übliche Zuschlagstoffe wie Alterungsschutzmittel (Antiozonantien, Antioxidantien, Lichtschutzmittel usw.) zugesetzt sein.

Als mögliche Additive des Klebesystems seien folgende genannt:

- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel wie rheologisch wirksame Additive (z. B. Verdicker)
- Netzadditive
- Blähmittel wie chemische Schäumungsmittel und/oder expandierte oder expandierbare Mikroballons und/oder Hohlkugeln wie Glashohlkugeln.
- Haftvermittler
- Verträglichkeitsvermittler / Kompatibilisatoren
- Farbmittel / Pigmente

Die Zuschlagstoffe oder Additive sind nicht zwingend, ein Vorteil der erfindungsgemäßen Klebemasse ist, dass diese ihre vorteilhaften Eigenschaften aufweist, auch ohne dass zusätzliche Additive einzeln oder in beliebiger Kombination zugesetzt sind. Dennoch kann es im Einzelnen vorteilhaft und wünschenswert sein, bestimmte weitere Eigenschaften der Klebemasse durch Additivzugabe zu justieren.

So lässt sich beispielsweise die Transparenz der Masse und deren Farbe beeinflussen. Manche Formulierungen sind optisch klar, andere opak, wieder andere farbig, schwarz, weiß oder grau eingestellt.

Auch unter den optionalen Zuschlagsstoffen beziehungsweise Additiven werden solche ausgewählt, die vor der Initiierung der Härtungsreaktion im Wesentlichen keine oder insbesondere gar keine Reaktion mit Epoxid-Funktionalitäten eingehen oder die Reaktionen der Epoxid-Funktionalitäten weder initiieren noch katalysieren, oder solche, bei denen die Reaktion mit Epoxid-Funktionalitäten anderweitig unterbunden ist.

In Kombination mit Comonomeren (d) auf Silan-Basis, sofern solche zum Einsatz kommen, oder auch alternativ können als Haftvermittler weitere Silane verwendet werden, die nicht durch Polymerisation in die erfindungsgemäßen funktionalisierten (Co)Polymere (A) eingebaut sind. Im Sinne dieser Erfindung einsetzbare Beispiele für Silane sind, ohne sich einschränken zu wollen, Methyltrimethoxysilan, Methyltriethoxysilan, Dimethyldimethoxysilan, Dimethyldiethoxysilan, Trimethylethoxysilan, Ethyltrimethoxysilan, Propyltrimethoxysilan, Propyltriethoxysilan, iso-Butyltrimethoxysilan, iso-Butyltriethoxysilan, Octyltrimethoxysilan, Octyltriethoxysilan, iso-Octyltrimethoxysilan, iso-Octyltriethoxysilan,

Hexadecyltrimethoxysilan, Hexadecyltriethoxysilan, Octadecylmethyldimethoxysilan, Phenyltrimethoxysilan, Phenyltriethoxysilan, Cyclohexylmethyldimethoxysilan, Dicyclopentyldimethoxysilan.

Ein Beispiel für silylfunktionalisierte Oligomere oder Polymere, die erfindungsgemäß zum Einsatz kommen können, ist Polyethylenglykol, das mit einer Trimethoxysilan-Gruppe verknüpft ist.

Weitere Beispiele für einsetzbare Silane, die zumindest eine Funktionalisierung tragen, sind, Vinyltrimethoxysilan, Vinyltriethoxysilan, Vinyl-tri(2-methoxyethoxy)-silan, Vinyltriisopropoxysilan, Vinyldimethoxymethylsilan, Vinyltriacetoxysilan, , 3-Glycidyloxypropyltrimethoxysilan, 3-Glycidyloxypropyltriethoxysilan, 2-(3,4-Epoxycyclohexyl)-ethyltriethoxysilan, 3-Glycidyloxypropyldiethoxymethylsilan, 3-Methacryloyloxypropyltrimethoxysilan, 3-Methacryloyloxypropyltriethoxysilan, 3-Methacryloyloxypropyltriisopropoxysilan, 3-Methacryloyloxypropyldimethoxymethylsilan, 3-Methacryloyloxypropyldiethoxymethylsilan, 3-Chloropropyltrimethoxysilan, 3-Chloropropyltriethoxysilan, 3-Ureidopropyltrimethoxysilan, 3-Ureidopropyltriethoxysilan, 2-Hydroxy-4-(3-triethoxysilylpropoxy)-benzophenon, 4-(3'-Chlorodimethylsilylpropoxy)-benzophenon.

Auch wenn TAG-Systeme in Kombination mit den erfindungsgemäßen funktionalisierten (Co)Polymeren bevorzugt werden, so sind in Kombination auch andere Initiator- / Härtersysteme einsetzbar. Auch hier werden Systeme bevorzugt, die in der Formulierung Latenz aufweisen.

Als Beispiele seien latentreaktive Diamine oder multifunktionelle Amine, Dicarbonsäuren oder multifunktionelle Carbonsäuren, difunktionelle Säureanhydride oder multifunktionelle Säureanhydride, primäre Dithiole oder multifunktionelle primäre Thiole genannt. Besonders vorteilhaft im Hinblick auf Latenz sind solche Reaktionspartner, die bei Raumtemperatur fest und nicht in dem erfindungsgemäßen Polymer oder einer Mischung, die dieses Polymer enthält, im nicht erweichten Zustand löslich sind aber im erweichten Zustand löslich oder beide Schmelzen miteinander mischbar sind.

Denkbar sind auch Initiatoren / Härter, die gekapselt vorliegen und unter Wärmeeinfluss in der Filmmatrix verteilt werden und dann zur Reaktion führen können.

Kommen Füllstoffpartikel zur Anwendung so können sie in ihrer Struktur bevorzugt kugelförmig, stäbchenförmig oder plättchenförmig vorliegen. Separierte Partikel, oftmals auch Primärpartikel genannt, sind dabei ebenso erfindungsgemäß wie aus mehreren Primärpartikeln gebildete Aggregate. Solche Systeme zeigen oft eine fraktale Überstruktur. Werden die Partikel aus Kristalliten gebildet, dann hängt die Primärpartikelform von der Art des Kristallgitters ab. Plättchenförmige Systeme können auch in Form von Schichtstapeln vorliegen. Kommen Füllstoffe zur Anwendung, dann typischerweise zu bis zu 15 Gew.-%.

In einer vorteilhaften Ausführungsform dieser Erfindung liegt eine Füllstoffsorte in der Klebeformulierung im Wesentlichen in Form von singulären kugelförmigen Partikeln vor. Die Partikeldurchmesser weisen dann Werte von kleiner als 500 nm, bevorzugt von kleiner als 100 nm, sehr bevorzugt von kleiner 25 nm auf. In einer weiteren vorteilhaften Auslegung dieser Erfindung liegt die zumindest eine funktionalisierte Füllstoffsorte in der Klebemasse im Wesentlichen in Form von singulären plättchenförmigen Partikeln vor. Die Schichtdicke solcher Plättchen weist dann Werte von bevorzugt kleiner als 10 nm und einen größten Durchmesser von bevorzugt kleiner als 1000 nm auf. In einer weiteren vorteilhaften Auslegung dieser Erfindung liegt die zumindest eine Füllstoffsorte in der Klebemasse im Wesentlichen in Form von singulären stäbchenförmigen Partikeln vor. In diesem Fall weisen diese Stäbchen einen Durchmesser von kleiner als 100 nm und eine Länge von kleiner als 15 μm auf. Die Stäbchen können auch gekrümmt vorliegen und/oder flexibel sein. Weiterhin ist es im Sinne dieser Erfindung vorteilhaft möglich, dass die zumindest eine Füllstoffsorte in der Klebemasse in Form von Primärpartikelaggregaten vorliegt. Diese Aggregate weisen einen Gyrationsradius (zu verstehen analog dem von Polymeren bekannten Terminus "Gyrationsradius") von kleiner als 1000 nm, bevorzugt von kleiner als 250 nm auf. Besonders bevorzugt werden solche Füllstoffpartikel im Sinne dieser Erfindung eingesetzt, deren räumliche Ausdehnung in zumindest einer Richtung kleiner als 250 nm ist, bevorzugt kleiner als 100 nm, sehr bevorzugt kleiner als 50 nm. Es ist außerdem im Sinne dieser Erfindung möglich, Kombinationen aus den zuvor genannten Füllstoffarten einzusetzen.

Typische und weitere erfindungsgemäß vorteilhafte Verbindungsklassen für Füllstoffe sind Oxide anorganischer Natur - insbesondere Metalloxide und/oder Halbmetalloxide -, Salze der Erdalkalimetalle sowie Minerale auf Silikatbasis, insbesondere Tonminerale und Tone. Zu den erfindungsgemäß einsetzbaren amorphen oder kristallinen Metalloxiden zählen zum Beispiel Siliziumdioxid, Aluminiumoxid, Titandioxid, Zirkoniumdioxid und Zinkoxid. Dem Fachmann sind weitere Systeme geläufig, die ebenso erfindungsgemäß eingesetzt werden können. Erdalkalimetallsalze umfassen beispielsweise Carbonate, Sulfate, Hydroxide, Phosphate und Hydrogenphosphate des Magnesiums, des Calciums, des Strontiums und des Bariums. Zu den erfindungsgemäß einsetzbaren Tonmineralen und Tonen zählen insbesondere silikatische Systeme wie Serpentine, Kaoline, Talkum, Pyrophyllit, Smectite wie insbesondere Montmorillonit, Vermiculite, Illite, Glimmer, Sprödglimmer, Chlorite, Sepiolith und Palygorskit. Weiterhin können synthetische Tonminerale wie Hectorite sowie deren verwandte Systeme wie z. B. Laponite ® der Fa. Laporte und Fluorhectorite sowie deren verwandte Systeme wie z. B. Somasif ® der Fa. Co-Op erfindungsgemäß eingesetzt werden.

Füllstoffpartikel können an ihrer Oberfläche funktionalisiert sein, hydrophob oder hydrophil eingestellt sein. Besonders vorteilhaft ist eine Funktionalisierung mittels Epoxid-haltigen Verbindungen, die an der Härtungsreaktion teilnehmen können.

Die Füllstoffe sind nicht zwingend, die Klebemasse funktioniert auch, ohne dass diese einzeln oder in beliebiger Kombination zugesetzt sind. Auch unter den optionalen Füllstoffen werden solche ausgewählt, die vor der Initiierung des Härtungsprozesses im Wesentlichen keine oder insbesondere gar keine Reaktion mit Epoxid-Funktionalitäten eingehen oder keine Reaktionen der Epoxid-Funktionalitäten initiieren oder katalysieren oder die Reaktion mit Epoxid-Funktionalitäten anderweitig unterbunden ist.

Reaktivklebebänder

Gegenstand der Erfindung ist weiterhin ein Verbund, erhältlich durch Verkleben zweier Substrate mittels einer erfindungsgemäßen thermisch härtbaren Klebemasse - einschließlich jede ihrer beschriebenen Ausgestaltungen - unter Härtung der Klebemasse, insbesondere nach einem Verfahren wie im nachstehenden näher erläutert.

Klebesysteme basierend auf Formulierungen, die erfindungsgemäße funktionalisierte (Co)Polymere enthalten, eignen sich besonders zum Einsatz in Form von Klebefilmen, die zumindest eine Schicht dieses Klebesystems enthalten.

Die Schichtdicke der zumindest einen Schicht einer erfindungsgemäßen härtbaren Klebemasse in solchen Reaktivklebebändern liegt typischerweise zwischen zumindest 10 μm und höchstens 500 μm, bevorzugt zwischen zumindest 20 μm und höchstens 250 μm. Nützliche Schichtdicken betragen 30 μm, 50 μm, 75 μm, 100 μm, 125 μm, 150 μm und 200 μm (jeweils im Rahmen der üblichen Fehlertoleranzen).

Bei den Reaktivklebebändern handelt es sich insbesondere um doppelseitig klebende Klebeprodukte auch wenn einseitig klebende Klebeprodukte ebenfalls möglich sind. Solche Klebeprodukte enthaltend zumindest eine Schicht einer erfindungsgemäßen härtbaren Klebemasse kommen im einfachsten Fall in einschichtiger Form zum Einsatz (so dass die härtbare Klebemasseschicht und das Reaktivklebeband identisch sind), aufgebracht auf ein wieder ablösbares (temporäres) Trägermaterial. Als temporäres Trägermaterial bieten sich alle Trennfolien und -papiere an, die aus dem Stand der Technik bekannt sind und ein- oder beidseitig mit einer Trennschicht ausgerüstet sind. Silikonisierte Papiere werden bevorzugt. Papiere können auch ein- oder beidseitig mit Polyethylen oder Polypropylen beschichtet sein. Es können auch zwei Lagen eines wiederablösbaren Trägermaterials zum Einsatz kommen, so dass Ober- und Unterseite des Klebefilms abgedeckt sind, auch wenn das Produkt nicht aufgewickelt vorliegt. Ein temporäres Trägermaterial ist nicht Teil des verklebten Verbunds. Es wird vor Verklebung der Substrate vom Reaktivklebeband entfernt.

Reaktivklebebänder enthaltend zumindest eine Schicht einer erfindungsgemäßen härtbaren Klebemasse können zudem ein weiteres Trägermaterial enthalten, das auch nach Verklebung Teil des Verbunds ist (Permanentträger). Hierzu bieten sich ebenfalls Folien und Papiere aber auch Gelege, Gewebe und Gewirke an. Die Oberflächen dieser Trägermaterialien können jeweils unabhängig voneinander chemisch (Primer, Plasma) und/oder physikalisch (Corona, Flamme, Plasma) so vorbehandelt sein, dass eine besonders gute Verankerung der härtbaren Klebefilmschicht auf dem Trägermaterial erreicht werden kann. Zum Zwecke der Verankerungsverbesserung auf Permanentträgermaterialien kann auch die Klebemasse physikalisch vorbehandelt werden (Corona, Flamme, Plasma). Vliese werden bevorzugt. Als Trägervlies werden in diesem bevorzugten Fall Flächengebilde aus einzelnen Fasern eingesetzt. Dabei können alle nach der Norm DIN EN 29092 definierten Vliese eingesetzt werden. Das Vlies besteht aus lose zusammengelegten Fasern, welche noch nicht miteinander verbunden sind. Die Festigkeit resultiert aus der Faser-eigenen Haftung. Man differenziert auch zwischen verfestigten und nicht-verfestigten Vliesen. Die Fasern sind statistisch verteilt. Die Vliese lassen sich nach den Fasermaterialien differenzieren. Als Fasermaterialien können mineralische Fasern, wie zum Beispiel Glas, Mineralwolle oder Basalt, tierische Fasern, wie zum Beispiel Seide oder Wolle, pflanzliche Fasern, wie zum Beispiel Baumwolle, Zellulose, chemische Fasern, wie zum Beispiel Polyamid, Polypropylen, Polyphenylensulfid, Polyacrylnitril, Polyimid, Polytetrafluorethylen, Aramid oder Polyester, oder Mischungen aus den vorgenannten Substanzen eingesetzt werden. Die Fasern können mechanisch durch Vernadelung oder Wasserstrahlen verfestigt werden, chemisch durch Zugabe von Bindemitteln oder thermisch durch das Erweichen in einem geeigneten Gasstrom, zwischen beheizten Walzen oder auch in einem Dampfstrom.

In einer sehr bevorzugten Auslegung der Erfindung werden Vliese auf Cellulosebasis eingesetzt. Das Flächengewicht der Vliese beträgt bevorzugt zwischen 4 und 100 $g/m^2$, besonders bevorzugt zwischen 10 und 70 $g/m^2$. Solche Vliese sind zum Beispiel kommerziell von der Firma Glatfelter erhältlich. Die Dicke dieser Vliese beträgt bevorzugt zwischen 20 und 100 μm, äußerst bevorzugt zwischen 30 und 60 μm.

Reaktivklebebänder mit Permanentträger können auf der Ober- und Unterseite verschieden dicke härtbare Klebemasseschichten und/oder bevorzugt härtbare Klebemasseschichten unterschiedlicher Art tragen. Kommen verschiedene härtbare Klebemasseschichten zum Einsatz dann erfüllen insbesondere beide die Ausführungen zu erfindungsgemäßen härtbaren Klebemassen.

Reaktivklebebänder enthaltend zumindest eine Schicht einer erfindungsgemäßen härtbaren Klebemasse können auch in zwei- oder mehrschichtiger und permanentträgerfreier Form zum Einsatz kommen. Bevorzugt die oberste und sehr bevorzugt auch die unterste Schicht sind eine Schicht aus erfindungsgemäßer härtbarer Klebemasse, wobei diese verschieden im Hinblick auf Dicke und/oder Art sein können. Kommen verschiedene härtbare Klebefilmschichten zum Einsatz, dann erfüllen insbesondere beide die Ausführungen zu erfindungsgemäßen härtbaren Klebemassen. Bei

mehrschichtigen Reaktivklebebändern mit oder ohne Permanentträger sind prinzipiell auch solche Ausführungen möglich, die auf der Oberseite die erfindungsgemäße härtbare Klebemasse aufweisen und auf der Unterseite eine Schicht eines anderen Klebers, wie beispielsweise einer Haftklebemasse oder eines Schmelzklebers.
Mehrschichtige und permanentträgerhaltige Reaktivklebebänder können Dicken von 30 $\mu$m bis 1000 $\mu$m, bevorzugt von 75 $\mu$m bis 300 $\mu$m aufweisen.

Das Reaktivklebeband kann bahnförmig als Rollenware, als Blattware oder als Stanzling konfektioniert sein und so zum Aufbau des Verbunds genutzt werden. Die Reaktivklebebänder sind bevorzugt bei Raumtemperatur nicht haftklebrig, da das Material so sehr vorteilhaft auch ohne temporären Träger konfekioniert (z. B. gestanzt) und für den Weiterverarbeitungsprozess zur Verfügung gestellt werden kann. Eine haftklebrige Ausgestaltung ist jedoch auch denkbar und vorteilhaft.

Teil der Erfindung sind auch Verbünde umfassend ein erstes Verklebungssubstrat, ein zweites Verklebungssubstrat und dazwischen angeordnet ein erfindungsgemäßes Reaktivklebeband. In dem Verbund liegt das Reaktivklebeband im gehärteten Zustand vor. Exemplarisch sei eine typische Herstellmöglichkeit für solche Verbünde unter Nutzung erfindungsgemäßer Reaktivklebebänder aufgeführt.
Im einfachsten Fall wird ein Stanzling des Reaktivklebebands ohne temporären Träger manuell, zum Beispiel mit Hilfe einer Pinzette, auf dem ersten Bauteil bzw. zwischen den zusammenzufügenden Bauteilen positioniert. In einer weiteren Ausführung wird der Stanzling des Reaktivklebebands nach der Positionierung auf dem ersten Bauteil mit einer Wärmequelle behandelt, wodurch sich die Haftung des Stanzlings zum ersten Bauteil erhöht. Dies geschieht bei der Laminiertemperatur. Im einfachsten Fall kann als Wärmequelle ein IR Strahler, ein Bügeleisen oder eine Heizplatte eingesetzt werden. Für diesen Prozess ist es von Vorteil, wenn der Stanzling noch mit einem temporären Trägermaterial ausgestattet ist, um ein Anhaften des Klebefilms am Werkzeug bzw. der Wärmequelle zu verhindern.
In einer weiteren vorteilhaften Ausgestaltung wird das erste Bauteil auf den Stanzling des Reaktivklebebands platziert. Die Platzierung erfolgt auf der offenen Seite. Auf der Rückseite befindet sich noch das temporäre Trägermaterial. Anschließend wird durch eine Wärmequelle Wärme durch das erste Bauteil in das Reaktivklebeband eingebracht. Dies erfolgt bei der Laminiertemperatur. Dadurch wird der Klebefilm tackig, d.h. klebrig, und haftet stärker am ersten Bauteil als an dem temporären Träger. Es wird durch das erste Bauteil geheizt.
Für die Einbringung der Wärme wird in einer bevorzugten Auslegung eine Heizpresse eingesetzt. Der Stempel der Heizpresse ist dabei zum Beispiel aus Aluminium, Messing oder Bronze gefertigt und wird in seiner Ausformung in der Regel den Konturen des Bauteils bzw. den Dimensionen des Stanzlings angepasst. Um eine genaue Positionierung des Stanzlings auf dem ersten Bauteil zu gewährleisten, werden in der Regel Formteile eingesetzt, die den Konturen der zu verklebenden Bauteile angepasst sind, wodurch Verrutschungen verhindert werden. Durch Führungsstifte im Formteil und entsprechende Führungslöcher im temporären Trägermaterial des Reaktivklebebands kann die exakte Positionierung zwischen Stanzling und erstem Bauteil sichergestellt werden. Andere Positionierungsmöglichkeiten sind denkbar. Nach der Wärmeaktivierung wird das erste Bauteil mit dem auflaminierten Klebefilm vom Formteil entfernt. Der gesamte Prozess kann auch in einen automatischen Prozess überführt werden.

Das Verfahren zur Herstellung eines erfindungsgemäßen Verbunds betrifft daher auch den Teilprozess umfassend die folgenden Schritte:

a) Fixieren des ersten Bauteils (Substrats) auf einem Formbauteil (einer Halterung);
b) Platzieren des zu verklebenden zweiten Bauteils (Substrats) mit einem Reaktivklebeband mit mindestens einer erfindungsgemäßen härtbaren Klebemasseschicht auf dem zweiten Bauteil (Substrat);
c) Applizieren von Druck und Temperatur, insbesondere mittels eines Heizpressstempels;
d) Entfernen des verklebten Verbunds aus dem Formbauteil (der Halterung), wobei zwischen Schritt c) und Schritt d) wahlweise noch eine Rückkühlung durchgeführt werden kann. In Schritt c) werden Druck und Temperatur appliziert. Bei dieser Temperatur handelt es sich um die Aktivierungstemperatur. Dies erfolgt durch einen Heizstempel, der aus einem Material mit guter thermischer Leitfähigkeit besteht. Vorteilhafte Materialien sind zum Beispiel Kupfer, Messing, Bronze oder Aluminium. Es können aber auch andere Metalle oder Legierungen eingesetzt werden. Des Weiteren sollte der Heizpressstempel bevorzugt die Form der Oberseite des einen Bauteils einnehmen. Diese Form kann wiederum 2-dimensionaler oder 3-dimensionaler Natur sein. Der Druck wird vorteilhafter Weise über einen Pneumatikzylinder aufgebracht. Die Applizierung muss aber nicht unbedingt über Luftdruck erfolgen. Auch sind zum Beispiel hydraulische Pressvorrichtungen oder elektromechanische Stellantriebe zum Beispiel über Spindeln möglich. Des Weiteren kann es von Vorteil sein, mehrfach Druck und Temperatur einzubringen, um zum Beispiel durch Reihenschaltung oder Rotationsprinzip den Prozessdurchsatz zu erhöhen. Die Heizpressstempel müssen in diesem Fall nicht alle mit der gleichen Temperatur und/ oder gleichem Druck betrieben werden. Weiterhin können auch die Kontaktzeiten der Stempel unterschiedlich gewählt werden.

Erfindungsgemäße Klebeprodukte erfüllen die Anforderungen in Hinblick auf initiale Ausstoßfestigkeit und Ausquetschneigung zumindest im Rahmen der in der linken Wertespalte angegeben Werte, besser die der bevorzugt

angegebenen Werte:

Tabelle 1: erforderliches Anforderungsprofil

| | Erfindungsgemäß zu erfüllender Wertebereich | Bevorzugt zu erfüllender erfindungsgemäßer Wertebereich | Sehr bevorzugt zu erfüllender erfindungsgemäßer Wertebereich | |
|---|---|---|---|---|
| Ausstoßfestigkeit Initial | ≥ 1,5 N/$mm^2$ | ≥ 2,5 N/$mm^2$ | ≥ 3,5 N/$mm^2$ | Test B |
| Ausquetschneigung | < 1,0 mm | < 0,5 mm | 0 mm | Test A |

Sehr bevorzugt werden auch die Anforderungen im Hinblick auf Ausstoßfestigkeit nach Feucht/Wärme-Lagerung erfüllt:

Tabelle 2: weiter bevorzugt zu erfüllende Anforderungen

| | Bevorzugt zu erfüllender Wertebereich | Bevorzugter zu erfüllender erfindungsgemäßer Wertebereich | Besonders bevorzugt zu erfüllender erfindungsgemäßer Wertebereich | |
|---|---|---|---|---|
| Ausstoßfestigkeit nach Feucht/WärmeLagerung | ≥ 1,5 N/$mm^2$ | ≥ 2,5 N/$mm^2$ | ≥ 3,5 N/$mm^2$ | Test E |

***Testmethoden***

Test A - Ausquetschen (Oozing)

Der Oozing-Test ermöglicht Aussagen über das Ausquetschverhalten der Klebmasse (siehe auch Figur 1). Zur Durchführung vergleiche auch Fig. 1a und 1b. Dazu wird ein kreisförmiges Substrat (1) aus Polycarbonat mit Durchmesser 21 mm mit dem zu untersuchenden Klebefilm (3) auf einem zweiten Substrat (2) aus anodisiertem Aluminium verklebt. Das zweite Substrat weist eine kreisförmige Bohrung mit Durchmesser 9 mm auf, das erste Substrat wurde zentriert mit dem Klebeprodukt über dieser Bohrung appliziert. Das Klebeprodukt (3) (als Transferklebebandmuster) hat ebenfalls einen Durchmesser von 21 mm und eine Dicke von 100 µm und wurde entsprechend zugeschnitten oder gestanzt.

Es wurde ein Verbund aus dem Substrat (1) (Polycarbonat; Macrolon 099) und Substrat (2) (anodisiertes Aluminium; E6EV1) untersucht. Substrat (1) hat eine Dicke von 1,0 mm und Substrat (2) hat eine Dicke von 3,0 mm.

Das Klebeprodukt / der Klebefilm wird bei 70 °C auf Substrat (1) vorlaminiert und der Verbund (Substrat (1) und Klebeprodukt (3)) anschließend auf Substrat (2) vorlaminiert. Die Gesamtzeit der Temperatureinwirkung (70 °C) im Vorlaminierprozess darf 30 s nicht überschreiten. Anschließend wird der Gesamtverbund unter Druck und Temperatureinwirkung verpresst. Temperatur, Druck und Verpresszeit sind mit den Ergebnissen zu vermerken. Als Verpressbedingungen wurden hier 180°C, 12 sec, 10 bar gewählt.

Nach dem Verpressen wurde das Ausquetschverhalten des Klebefilms bestimmt. Gemessen wird in vier rechtwinklig aufeinander stehenden Positionen "Nord", "Ost", "Süd" und "West" jeweils in radialer Richtung bezogen auf das kreisrunde Polycarbonat-Substrat der maximale Abstand A vom Rand des Polycarbonat-Substrats bis zum äußersten Rand der ausgequetschten Masse (Oz) auf der entsprechenden Seite mit einer Präzisionsskalenlupe mit einer 1/10 mm Skalenteilung Das Ergebnis war der Mittelwert aus den vier Einzelmessungen.

Test B - Ausstoßfestigkeit (Push-out)

Der Push-Out-Test ermöglicht Aussagen über die Verklebungsfestigkeit eines Klebeprodukts in Richtung der Klebschichtnormalen. Dazu wird ein kreisförmiges Substrat (1) mit Durchmesser 21 mm mit dem zu untersuchenden Klebefilm auf einem zweiten Substrat (1 oder 2) verklebt. Das zweite Substrat weist eine kreisförmige Bohrung mit Durchmesser 9 mm auf, das erste Substrat wurde zentriert mit dem Klebeprodukt über dieser Bohrung appliziert. Das Klebeprodukt hat ebenfalls einen Durchmesser von 21 mm und wurde entsprechend zugeschnitten oder gestanzt.

Es wurde ein Verbund aus dem Substrat (1) (Polycarbonat; Macrolon 099) und Substrat (2) (anodisiertes Aluminium; E6EV1) untersucht. Substrat (1) hat eine Dicke von 1,0 mm und Substrat (2) hat eine Dicke von 3,0 mm.

Das Klebeprodukt / der Klebefilm wird bei 70 °C auf Substrat (1) vorlaminiert und der Verbund (Substrat (1) und Klebeprodukt) anschließend auf Substrat (2) vorlaminiert. Die Gesamtzeit der Temperatureinwirkung (70 °C) im Vorlaminierprozess darf 30 s nicht überschreiten. Anschließend wird der Gesamtverbund unter Druck und Temperatureinwirkung verpresst. Temperatur, Druck und Verpresszeit sind mit den Ergebnissen zu vermerken.

B1: Verpressbedingungen 180°C, 12 sec, 10 bar.
B2: Verpressbedingungen 150°C, 30 sec, 10 bar.

Mittels eines zylindrischen Stempels (Durchmesser 7 mm), der in eine Zugprüfmaschine eingespannt ist, wird durch das Loch in Substrat (2) auf den Verbund (Substrat (1) und Klebeprodukt) gedrückt und so eine Kraft auf die Klebefuge im Verbund ausgeübt. Substrat (2) wird derart in der Zugprüfmaschine fixiert, dass eine möglichst allseitige, flächige Auflage / Fixierung gewährleistet ist, wobei Substrat (1) frei durch den Stempel herausgedrückt werden kann. Die Prüfgeschwindigkeit liegt bei 10 mm/s. Aufgenommen wird diejenige Kraft, bei der die Verklebung versagt und Substrat (1) von Substrat (2) gelöst wird. Die Kraft wird auf die Verklebungsfläche (282 $mm^2$) bezogen, so dass Push-Out-Festigkeiten in Einheiten von $N/mm^2$ resultieren. Das Prüfklima ist 23 °C und 50 % relative Luftfeuchtigkeit, die Prüfkörper werden nach dem Verpressen 48 h im Prüfklima gelagert. Die Ergebnisse sind Mittelwerte aus drei Einzelprüfungen und werden in $N/mm^2$ angegeben.

Test C - Molmasse (GPC)

Die Bestimmung von Molmassen erfolgt an 100 µL klarfiltrierter Probe (Probenkonzentration 1,5 g/L). Als Eluent wird Tetrahydrofuran mit 0,1 Vol.-% Trifluoressigsäure eingesetzt, als interner Standard 200 ppm (m/V) Toluol. Die Messung erfolgt bei 25°C.

Als Vorsäule wird eine Säule Typ PSS - SDV, 10 µm, ID 8.0 mm x 50 mm (Angaben hier und im Folgenden in der Reihenfolge: Typ, Partikelgröße, Innendurchmesser x Länge) verwendet. Zur Auftrennung wird eine Säule des Typs PSS - SDV, 10 µm linear one, ID 8.0 mm x 300 mm eingesetzt (Säulen und Detektor der Firma Polymer Standards Service; Detektion mittels Detektor PSS-SECcurity 1260 RID). Die Durchflussmenge beträgt 0,5 mL pro Minute. Die Kalibration wird mit Polystyrol-Standards im Trennbereich der Säule durchgeführt und unter Nutzung der bekannten Mark Houwink Koeffizienten a und K universell in eine Polymethylmethacrylat-Kalibrierung umgerechnet.

Test D - Glasübergangstemperaturen (DSC)

Die Bestimmung der Glasübergangstemperatur ($T_G$) erfolgt mittels dynamischer Differenzkalorimetrie (DSC; englisch Differential Scanning Calorimetry) an einem DSC 204 F1 der Firma Netzsch. Die Probe wird in verstärkte Aluminium-Tiegel (Deckel manuell gelocht) eingewogen. Das Temperaturprogramm fährt zwei Aufheizrampen, zuerst wird von 25 °C auf - 100 °C mit flüssigem Stickstoff heruntergekühlt und mit 10 K/min auf 180 °C aufgeheizt. Glasübergänge werden als Stufen im Thermogramm erkannt. Die Glasübergangstemperatur wird folgendermaßen ausgewertet (siehe dazu Figur 2). An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

Anschließend wird wieder auf -100 °C heruntergekühlt und mit 10 K/min auf 250 °C aufgeheizt. Es werden die erste und die zweite Aufheizrampe ausgewertet. Die so ermittelte Glasübergangstemperatur der ersten Aufheizkurve entspricht der Glasübergangstemperatur des unvernetzten Polymers. Die ermittelte Glasübergangstemperatur resultierend aus der zweiten Aufheizkurve entspricht einer, durch die thermische Beanspruchung der Messung vernetzten Glasübergangstemperatur des Polymers bzw. einer durch die Aktivierung eines thermischen Vernetzer / Initiators vernetzten Polymers bzw. Formulierung, im Falle der Anwesenheit eines solchen Aktivators in einem Polymer bzw. einer Formulierung. Auch für nicht reaktive Systeme lässt sich die Glastemperatur auf diese Weise bestimmen. Es wird dann als Ergebnis die Stufe in der zweiten Heizkurve ausgewertet.

Test E - Feucht/Wärme-Beständigkeit

Der zu vermessende Verbund wird nach dem Verpressen für 72 h in einem Klimaschrank bei 85 °C und 85 % relativer Feuchtigkeit gelagert (Art der Lagerung ist mit den Ergebnissen zu vermerken). Das Prüfklima für den Push-Out-Test ist 23 °C und 50 % relative Luftfeuchtigkeit, die Prüfkörper werden nach der Feucht-/Wärmelagerung für 24 h im Prüfklima gelagert.

E1: Verpressbedingungen 180°C, 12 sec, 10 bar.
E2: Verpressbedingungen 150°C, 30 sec, 10 bar.

Für die Prüfkörperpräparation und die Durchführung des Durchstoßtests sei auf Test B verwiesen.

Test F - Aktivierungstemperatur (DSC)

Die für die thermische Härtung der kationisch härtbaren Reaktivharze erforderliche Aktivierungstemperatur wird über Differential Scanning Calorimetry (DSC) bestimmt. Die Muster werden in Al-Tiegeln mit gelochtem Deckel und Stickstoffatmosphäre vermessen. Um ein gutes Bedecken des Tiegelbodens mit der Probe zu erreichen, wird das Muster im Gerät zunächst auf 40 °C aufgeheizt und wieder auf 25 °C abgekühlt. Die eigentliche Messung wird bei 25 °C gestartet, die Aufheizkurve läuft mit einer Heizrate von 10 K/min. Die erste Aufheizkurve wird ausgewertet. Das Anspringen der thermisch initiierten Härtungsreaktion wird von der Messapparatur durch die damit verbundene frei werdende Reaktionsenthalpie registriert und als exothermes Signal (Peak) im Thermogramm angezeigt. Als Aktivierungstemperatur wird diejenige Temperatur dieses Signals verwendet, bei der die Messkurve von der Basislinie abzuweichen beginnt (als ein Hilfsmittel, um diesen Punkt zu finden, kann die erste Ableitung des Thermogramms dienen; der Beginn der Reaktion kann mit dem Punkt im Thermogramm in Verbindung gebracht werden, bei dem die Differenz der ersten Ableitung des Peaks im Onsetbereich und der ersten Ableitung der Basislinie des Thermogramms einen Betrag von 0,01 mW/(K min) annimmt; sind exotherme Signal im Diagramm nach oben dargestellt, dann ist das Vorzeichen positiv, sind sie nach unten dargestellt, dann ist das Vorzeichen negativ). Es wird zudem das Integral, normiert auf die eingewogene Mustermenge, notiert.

***Beispiele***

Eingesetzte Rohstoffe

| | | |
|---|---|---|
| Vazo® 52 | 2,2-Azobis(2,4-dimethylvaleronitril) | Fa. DuPont |
| TTA15 | 3,4-Epoxycyclohexylmethylmethacrylat | Fa. Tetrachem |
| K-Pure® CXC 1614 | thermischer Aktivator auf Basis eines quartären Ammoniumsalzes der Trifluoromethansulfonsäure | Fa. King Industries |
| K-Pure® CXC 1615 | thermischer Aktivator auf Basis eines Aminsalzes der Trifluoromethansulfonsäure | Fa. King Industries |
| K-Pure® CXC 1612 | thermischer Aktivator auf Basis eines quartären Amimonium-Antimon-Hexafluorids | Fa. King Industries |
| Desmomelt® 530 | Polyurethan | Fa. Covestro |
| Uvacure 1500 | (3',4'-Epoxycyclohexan)-methyl-(3,4-epoxycyclohexyl)-carboxylat | Fa. Allnex |
| Syna Epoxy S28 | Bis-(3,4-Epoxycyclohexylmethyl)-adipat | Fa. Synasia |
| Dynasylan® GLYEO | 3-Glycidyloxypropyltriethoxysilan | Fa. Evonik |

Herstellung der Klebemassen, und Reaktivklebebandmuster:

Beispiel A

Ein für radikalische Polymerisationen konventioneller, druckfester 2 L-Polymerisationsreaktor wurde mit 100 g 3,4-Epoxycyclohexylmethylmethacrylat und 396 g Methylethylketon gefüllt. Nach 45 Minuten Durchleiten von Stickstoffgas unter Rühren wurde der Reaktor auf 70 °C Produkttemperatur hochgeheizt und bis zum Sieden evakuiert. Anschließend wurden 2,0 g 2,2-Azobis(2,4-dimethylvaleronitril) gelöst in 4,0 g Methylethylketon hinzugegeben. Die Reaktion wird bei konstanten 70 °C Produkttemperatur unter Siedekühlung durchgeführt. Nach 1 h Reaktionszeit wurden auf 70 °C vortemperierte und für 45 Minuten mit Stickstoff durchleitete 100 g 3,4-Epoxycyclohexylmethylmethacrylat hinzugegeben und 2,0 g 2,2-Azobis(2,4-dimethylvaleronitril) gelöst in 4,0 g Methylethylketon hinzugegeben. Nach 2 h

Reaktionszeit wurden auf 70 °C vortemperierte und für 45 Minuten mit Stickstoff durchleitete 100 g 3,4-Epoxycyclohexylmethylmethacrylat hinzugegeben und 2,0 g 2,2-Azobis(2,4-dimethylvaleronitril) gelöst in 4,0 g Methylethylketon hinzugegeben.. Nach 3 h Reaktionszeit wurden auf 70 °C vortemperierte und für 45 Minuten mit Stickstoff durchleitete 100 g 3,4-Epoxycyclohexylmethylmethacrylat hinzugegeben und 2,0 g 2,2-Azobis(2,4-dimethylvaleronitril) gelöst in 4,0 g Methylethylketon hinzugegeben. Die Reaktion wurde nach 24 h Reaktionszeit abgebrochen und auf Raumtemperatur abgekühlt.

Die Molmasse des resultierenden Polymers betrug 15 900 g/mol.

Die Glasübergangstemperatur des ungehärteten Polymers betrug 32 °C (erste Aufheizrampe) beziehungsweise 72 °C (zweite Aufheizrampe).

Beispiel B

Ein für radikalische Polymerisationen konventioneller, druckfester 2 L-Polymerisationsreaktor wurde mit 400 g 3,4-Epoxycyclohexylmethylmethacrylat, 420 g Isopropanol und 726 g Methylethylketon gefüllt. Nach 45 Minuten Durchleiten von Stickstoffgas unter Rühren wurde der Reaktor auf 65 °C Produkttemperatur hochgeheizt und bis zum Sieden evakuiert. Anschließend wurden 4,0 g 2,2-Azobis(2,4-dimethylvaleronitril) gelöst in 8,0 g Methylethylketon hinzugegeben. Die Reaktion wird bei konstanten 65 °C Produkttemperatur unter Siedekühlung durchgeführt. Nach 7 h Reaktionszeit wurden 4,0 g 2,2-Azobis(2,4-dimethylvaleronitril) gelöst in 8,0 g Methylethylketon hinzugegeben. Die Reaktion wurde nach 24 h Reaktionszeit abgebrochen und auf Raumtemperatur abgekühlt.

Die Molmasse des resultierenden Polymers betrug 25 900 g/mol.

Die Glasübergangstemperatur des ungehärteten Polymers betrug 34 °C (erste Aufheizrampe) beziehungsweise 68 °C (zweite Aufheizrampe).

Beispiel C

Ein für radikalische Polymerisationen konventioneller, druckfester 2 L-Polymerisationsreaktor wurde mit 400 g 3,4-Epoxycyclohexylmethylmethacrylat, 420 g Isopropanol und 150 g Methylethylketon gefüllt. Nach 45 Minuten Durchleiten von Stickstoffgas unter Rühren wurde der Reaktor auf 65 °C Produkttemperatur hochgeheizt und bis zum Sieden evakuiert. Anschließend wurden 1,6 g 2,2-Azobis(2,4-dimethylvaleronitril) gelöst in 30,4 g Isopropanol hinzugegeben. Die Reaktion wird bei konstanten 65 °C Produkttemperatur unter Siedekühlung durchgeführt. Nach 7 h Reaktionszeit wurden 1,6 g 2,2-Azobis(2,4-dimethylvaleronitril) gelöst in 30,4 g Isopropanol hinzugegeben. Nach 14 Stunden Reaktionszeit wurde mit 100 g Methylethylketon verdünnt. Die Reaktion wurde nach 24 h Reaktionszeit abgebrochen und auf Raumtemperatur abgekühlt.

Die Molmasse des resultierenden Polymers betrug 30 600 g/mol.

Die Glasübergangstemperatur des ungehärteten Polymers betrug 38 °C (erste Aufheizrampe) beziehungsweise 70 °C (zweite Aufheizrampe).

Aus den ermittelten Glasübergangstemperaturen der beiden Aufheizrampen der drei vorstehenden Beispiele lässt sich erkennen, dass bereits bei Abwesenheit des erfindungsgemäßen Härters bei sehr hohen Temperaturen eine Selbstvernetzung stattfindet und das ungehärtete Polymer jeweils eine niedrigere Glasübergangstemperatur hat als das (teil-)gehärtete Polymer.

Für die Herstellung der Reaktivklebebandmuster (Beispiele E1 - E8 und Vergleichsbeispiele V1 - V5) wurden alle jeweils erforderlichen Formulierungsbestandteile (siehe Tabellen 3 und 4) in Lösungsmittel aufgelöst bzw. etwaige unlösliche Bestandteile wie anorganische Füllstoffe mit einer Dispergierscheibe suspendiert und als Lösung bzw. Suspension beschichtet. Der Lösemittelgehalt in den Lösungen betrug 80 Gew.-%. Als Lösemittel wurde Methylethylketon verwendet. Die Beschichtung erfolgte auf einem silikonisierten Trennpapier. Beschichtete und getrocknete Muster wurden für 30 min bei 50 °C getrocknet. Nach der Trocknung betrug die Klebeschichtdicke der Ausstriche 100 μm (im Rahmen der üblichen Fehlertoleranzen). Nach 24 h wurden die Reaktivklebebandmuster zu Prüfkörpern verarbeitet und diese dann nach weiteren 48 h vermessen. Details zu den Prüfkörpern sind in den jeweiligen Testmethoden zu finden. Die Testergebnisse sind in den Tabellen 3 und 4 zusammengefasst.

Vergleichsbeispiel V1 zeigt die erreichbare Verklebungsfestigkeit eines nicht reaktiven Klebebands, dass die Verklebungsfestigkeit lediglich über Erweichen und Erstarren aufbaut. Auch wenn die Verklebungsfestigkeiten auf hohem Niveau liegen, so erfüllt ein Klebeband dieser Art nicht die Anforderungen bzgl. geringer Ausquetschneigung.

Beispiele E1 bis E4 und V2, V3 zeigen, dass ein erfindungsgemäßer Anteil an härtbarem (Co)polymer (A) zu hohen Verklebungsfestigkeiten führt, gleichzeitig aber auch die Anforderungen an geringe Ausquetschneigung gut (Beispiel E2 und E4) bzw. sehr gut (Beispiel E1 und E3) erfüllen. Wird zuviel des (Co)polymers (A) eingesetzt, dann wird die Anforderung bzgl. geringer Ausquetschneigung nicht mehr erfüllt (Vergleichsbeispiel V2 und V3). Vergleichsbeispiele V4 und V5 verdeutlichen, dass zu weiche Klebemassen resultieren, wenn statt der erfindungsgemäßen härtbaren (Co)polymere (A) niedermolekulare Reaktivharze nach dem Stand der Technik eingesetzt werden. Die Anforderungen bzgl.

geringer Ausquetschneigung werden auf diese Weise nicht erfüllt.

Beispiele E5 bis E8 untermauern die Vorteile erfindungsgemäßen Vorgehens und zeigen zudem zusätzlich, dass sehr gute Feucht-/Wärme-Resistenz erreicht wird.

Tabelle 3

| | | Beispiel V1 | Beispiel E1 | Beispiel E2 | Beispiel V2 | Beispiel E3 | Beispiel E4 | Beispiel V3 |
|---|---|---|---|---|---|---|---|---|
| | | | | | | | | |
| (Co)polymer (A) | Beispiel A | | 9,70% | 29,70% | 49,70% | 9,70% | 29,70% | 49,70% |
| | Beispiel B | | | | | | | |
| | Beispiel C | | | | | | | |
| | | | | | | | | |
| Härter / Initiator (B) | CXC 1614 | | 0,30% | 0,30% | 0,30% | | | |
| | CXC 1615 | | | | | 0,30% | 0,30% | 0,30% |
| | | | | | | | | |
| Matrixpolymer (C) | Desmomelt 530 | 100,00% | 90,00% | 70,00% | 50,00% | 90,00% | 70,00% | 50,00% |
| | | | | | | | | |
| | Summe | 100,00% | 100,00% | 100,00% | 100,00% | 100,00% | 100,00% | 100,00% |
| | | | | | | | | |
| | | | | | | | | |
| | Test B1 | 2,5 | 3,6 | 2,8 | 2,2 | 4,1 | 2,9 | 2,6 |
| | Test B2 | 2,6 | 4 | 2,7 | 2,0 | 3,2 | 3,2 | 2,5 |
| | Test A | > 1 mm | 0 mm | 0,9 mm | > 1 mm | 0 mm | 0,9 mm | > 1 mm |
| | Test E1 | n. d. | n. d. | n. d. | n. d. | n. d. | n. d. | n. d. |
| | Test E2 | n. d. | n. d. | n. d. | n. d. | n. d. | n. d. | n. d. |
| (n. d.: nicht ermittelt) | | | | | | | | |

Tabelle 4

| | | Beispiel V4 | Beispiel V5 | Beispiel E5 | Beispiel E6 | Beispiel E7 | Beispiel E8 |
|---|---|---|---|---|---|---|---|
| | | | | | | | |
| (Co)polymer (A) | Beispiel A | | | 9,70% | | | |
| | Beispiel B | | | | 9,90% | 9,70% | |
| | Beispiel C | | | | | | 9,90% |
| | | | | | | | |
| Härter/Initiator (B) | CXC 1614 | 0,30% | 0,30% | | 0,10% | 0,30% | 0,10% |
| | CXC 1615 | | | | | | |
| | CXC 1612 | | | 0,30% | | | |
| | | | | | | | |
| Matrixpolymer (C) | Desmomelt 530 | 90,00% | 80,00% | 90,00% | 90,00% | 87,00% | 87,00% |
| | | | | | | | |
| Reaktivharz (D2) | Uvacure 1500 | 9,70% | | | | | |
| | Synasia S28 | | 19,70% | | | | |
| | | | | | | | |
| weitere Bestandteile (D) | Dynasylan GLYEO | | | | | 3,00% | 3,00% |
| | | | | | | | |
| | Summe | 100,00% | 100,00% | 100,00% | 100,00% | 100,00% | 100,00% |
| | | | | | | | |
| | | | | | | | |
| | Test B1 | 2,5 | 2,6 | 5,5 | 4,3 | 4,4 | 5,1 |
| | Test B2 | 3,3 | 3,2 | 4,4 | 4,1 | 4,2 | 4,4 |
| | Test A | > 1mm | > 1 mm | 0 mm | 0 mm | 0 mm | 0 mm |
| | Test E1 | n. d. | n. d. | 1,8 | 3,6 | 3,6 | 4,1 |
| | Test E2 | n. d. | n. d. | 1,8 | 4,0 | 2,8 | 4,4 |
| (n. d.: nicht ermittelt) | | | | | | | |

## Patentansprüche

**1.** Thermisch härtbare Haftklebemasse, bestehend aus den folgenden Komponenten:

(A) 4,9 bis 34,9 Gew.-% (bezogen auf die Gesamtheit der härtbaren Klebemasse) eines epoxidfuntionalisierten (Co)Polymers mit einer gewichtsmittleren Molmasse im Bereich von 5 000 g/mol bis 200 000 g/mol (GPC-Messung gemäß Angaben der Beschreibung), auf Basis von mehr als 30 bis 100 Gew.-%, bevorzugt 50 bis 100 Gew.-%, (bezogen auf die Gesamtheit der dem epoxidfuntionalisierten (Co)Polymer zugrundeliegenden Monomere) zumindest einer Sorte eines mit einer Epoxy-Gruppe funktionalisierten (meth)acrylischen (Co)Monomers (a),
(B) 0,1 bis 5 Gew.-% (bezogen auf die Gesamtheit der härtbaren Klebemasse) zumindest eines thermisch aktivierbaren Härters für eine kationische Härtung von Epoxiden,
(C) 65 bis 95 Gew.-% (bezogen auf die Gesamtheit der härtbaren Klebemasse) zumindest einer Sorte eines Matrixpolymers als Filmbildner, wobei als Matrixpolymere thermoplastische Polyurethane eingesetzt werden,
(D) optional 0 bis 30 Gew.-% weiterer Bestandteile.

2. Thermisch härtbare Klebemasse nach Anspruch 1, **dadurch gekennzeichnet, dass** die gewichtsmittlere Molmasse des epoxidfunktionalisierten (Co)Polymers mindestens 10 000 g/mol, bevorzugt mindestens 20 000 g/mol beträgt (GPC-Messung gemäß Angaben der Beschreibung).

3. Thermisch härtbare Klebemasse nach einem der vorangehenden Ansprüche, **dadurch gekennzeichnet, dass** die gewichtsmittlere Molmasse des epoxidfunktionalisierten (Co)Polymers höchstens 150 000 g/mol, bevorzugt höchstens 100 000 g/mol beträgt (GPC-Messung gemäß Angaben der Beschreibung).

4. Thermisch härtbare Klebemasse nach einem der vorangehenden Ansprüche, **dadurch gekennzeichnet, dass** für ein, mehrere oder alle der mit einer Epoxy-Gruppe funktionalisierten (meth)acrylischen (Co)Monomere (a) cycloaliphatische Epoxide eingesetzt werden.

5. Thermisch härtbare Klebemasse nach Anspruch 4, **dadurch gekennzeichnet, dass** als cycloaliphatische Epoxide 3,4-Epoxycyclohexyl-substituierte Monomere gewählt werden, insbesondere gewählt aus der Gruppe: 3,4-Epoxycyclohexylmethylmethacrylat, 3,4-Epoxycyclohexylmethylacrylat, 3,4-Epoxycyclohexylmethacrylat, 3,4-Epoxycyclohexylacrylat.

6. Thermisch härtbare Klebemasse nach einem der vorangehenden Ansprüche, **dadurch gekennzeichnet, dass** der zumindest eine thermisch aktivierbare Härter für eine kationische Härtung von Epoxiden ein thermisch aktivierbarer Säurebildner (Thermal Acid Generator, TAG) ist.

7. Thermisch härtbare Klebemasse nach einem der vorangehenden Ansprüche, **dadurch gekennzeichnet, dass** als thermisch aktivierbarer Härter für eine kationische Härtung von Epoxiden ein oder mehrere Vertreter aus der folgenden Liste eingesetzt werden:
Pyridiniumsalze, Ammoniumsalze - wie insbesondere Aniliniumsalze -, Sulfoniumsalze - wie insbesondere Thiolaniumsalze -, Lanthanoidtriflate.

8. Verfahren zur Verklebung zweier Substrate mittels einer thermisch härtbaren Klebemasse nach einem der vorangehenden Ansprüche, **gekennzeichnet durch** die Durchführung zumindest der folgenden Verfahrensschritte:

a) Fixieren des ersten Substrats auf einer Halterung;
b) Platzieren des zu verklebenden zweiten Substrats mit einem Reaktivklebeband mit mindestens einer erfindungsgemäßen härtbaren Klebemasseschicht auf dem zweiten Substrat;
c) Applizieren von Druck und Temperatur, insbesondere mittels eines Heizpressstempels;
d) Entfernen des verklebten Verbunds aus der Halterung.

9. Verbund, erhältlich durch Verkleben zweier Substrate mittels einer thermisch härtbaren Klebemasse nach einem der Ansprüche 1 bis 7 unter Härtung der Klebemasse, insbesondere nach einem Verfahren nach Anspruch 8.

## Claims

1. A thermally curable adhesive composition consisting of the following components:

(A) 4.9% to 34.9% by weight (based on the entirety of the curable adhesive composition) of an epoxy-functionalized (co)polymer having a weight-average molar mass in the range from 5 000 g/mol to 200 000 g/mol (GPC measurement as per the description), based on more than 30% to 100% by weight, preferably 50% to 100% by weight, (based on the entirety of the parent monomers of the epoxy-functionalized (co)polymer) of at least one type of (meth)acrylic (co)monomer (a) functionalized with an epoxy group,
(B) 0.1% to 5% by weight (based on the entirety of the curable adhesive composition) of at least one thermally activatable curing agent for cationic curing of epoxides,

(C) 65% to 95% by weight (based on the entirety of the curable adhesive composition) of at least one type of matrix polymer as film former,
(D) optionally 0% to 30% by weight of further constituents.

2. The thermally curable adhesive composition as claimed in claim 1, **characterized in that** the weight-average molar mass of the epoxy-functionalized (co)polymer is at least 10 000 g/mol, preferably at least 20 000 g/mol (GPC measurement as per the description).

3. The thermally curable adhesive composition as claimed in either of the preceding claims, **characterized in that** the weight-average molar mass of the epoxy-functionalized (co)polymer is at most 150 000 g/mol, preferably at most 100 000 g/mol (GPC measurement as per the description).

4. The thermally curable adhesive composition as claimed in any of the preceding claims, **characterized in that** cycloaliphatic epoxides are used for one, more than one or all the (meth)acrylic (co)monomers (a) functionalized with an epoxy group.

5. The thermally curable adhesive composition as claimed in claim 4, **characterized in that** the cycloaliphatic epoxides chosen are 3,4-epoxycyclohexyl-substituted monomers, especially selected from the group of: 3,4-epoxycyclohexylmethyl methacrylate, 3,4-epoxycyclohexyl methylacrylate, 3,4-epoxycyclohexyl methacrylate, 3,4-epoxycyclohexyl acrylate.

6. The thermally curable adhesive composition as claimed in any of the preceding claims, **characterized in that** the at least one thermally activatable curing agent for cationic curing of epoxides is a thermally activatable acid former (Thermal Acid Generator, TAG).

7. The thermally curable adhesive composition as claimed in any of the preceding claims, **characterized in that** the thermally activatable curing agent used for cationic curing of epoxides is one or more representatives from the following list:
pyridinium salts, ammonium salts - such as anilinium salts in particular, sulfonium salts - such as thiolanium salts in particular, lanthanoid triflates.

8. A method of bonding two substrates by means of a thermally curable adhesive composition as claimed in any of the preceding claims, **characterized by** the performance at least of the following process steps:

a) fixing the first substrate on a holder;
b) positioning the second substrate to be bonded by a reactive adhesive tape having at least one curable adhesive composition layer of the invention on the second substrate;
c) applying pressure and temperature, especially by means of a hot press ram;
d) removing the bonded composite from the holder.

9. A composite obtainable by bonding two substrates by means of a thermally curable adhesive composition as claimed in any of claims 1 to 7 with curing of the adhesive composition, especially by a method as claimed in claim 8.

## Revendications

1. Masse autoadhésive durcissable thermiquement, constituée des composants suivants :

(A) 4,9 à 34,9 % en poids (par rapport à la totalité de la masse adhésive durcissable) d'un (co)polymère fonctionnalisé par époxyde doté d'une masse molaire moyenne en poids dans la plage de 5 000 g/mole à 200 000 g/mole (mesure de CPG selon les indications de la description), à base de plus de 30 à 100 % en poids, préférablement 50 à 100 % en poids (par rapport à la totalité des monomères formant le (co)polymère fonctionnalisé par époxyde) d'au moins une sorte de (co)monomère (a) (méth)acrylique fonctionnalisé par un groupe époxy,
(B) 0,1 à 5 % en poids (par rapport à la totalité de la masse adhésive durcissable) d'au moins un agent de durcissement activable thermiquement pour un durcissement cationique d'époxydes,
(C) 65 à 95 % en poids (par rapport à la totalité de la masse adhésive durcissable) d'au moins une sorte de polymère matriciel en tant qu'agent filmogène, des polyuréthanes thermoplastiques étant utilisés en tant que

polymères matriciels,
(D) éventuellement 0 à 30 % en poids d'ingrédients supplémentaires.

**2.** Masse adhésive durcissable thermiquement selon la revendication 1, **caractérisée en ce que** la masse molaire moyenne en poids du (co)polymère fonctionnalisé par époxyde est d'au moins 10 000 g/mole, préférablement d'au moins 20 000 g/mole (mesure de CPG selon les indications de la description).

**3.** Masse adhésive durcissable thermiquement selon l'une quelconque des revendications précédentes, **caractérisée en ce que** la masse molaire moyenne en poids du (co)polymère fonctionnalisé par époxyde est d'au plus 150 000 g/mole, préférablement d'au plus 100 000 g/mole (mesure de CPG selon les indications de la description).

**4.** Masse adhésive durcissable thermiquement selon l'une quelconque des revendications précédentes, **caractérisée en ce que** pour l'un, plusieurs ou tous les (co)monomères (a) (méth)acryliques fonctionnalisés par un groupe époxy, des époxydes cycloaliphatiques sont utilisés.

**5.** Masse adhésive durcissable thermiquement selon la revendication 4, **caractérisée en ce qu'**en tant qu'époxydes cycloaliphatiques, des monomères substitués par 3,4-époxycyclohexyle sont choisis, en particulier choisis dans le groupe : méthacrylate de 3,4-époxycyclohexylméthyle, acrylate de 3,4-époxycyclohexylméthyle, méthacrylate de 3,4-époxycyclohexyle, acrylate de 3,4-époxycyclohexyle.

**6.** Masse adhésive durcissable thermiquement selon l'une quelconque des revendications précédentes, **caractérisée en ce que** l'agent de durcissement activable thermiquement pour un durcissement cationique d'époxydes est un agent de formation d'acide activable thermiquement (Thermal Acid Generator, TAG).

**7.** Masse adhésive durcissable thermiquement selon l'une quelconque des revendications précédentes, **caractérisée en ce qu'**en tant qu'agent de durcissement activable thermiquement pour un durcissement cationique d'époxydes, l'un ou plusieurs éléments de la liste suivante sont utilisés :
des sels de pyridinium, des sels d'ammonium - comme en particulier des sels d'anilinium, des sels de sulfonium

- comme en particulier des sels de thiolanium, des triflates de lanthanides.

**8.** Procédé pour le collage de deux substrats au moyen d'une masse adhésive durcissable thermiquement selon l'une quelconque des revendications précédentes, **caractérisé par** la mise en œuvre au moins des étapes de procédé suivantes :

a) fixation du premier substrat sur un support ;
b) mise en place du deuxième substrat devant être collé comportant un ruban adhésif réactif comportant au moins une couche de masse adhésive durcissable selon l'invention sur le deuxième substrat ;
c) application de pression et de température, en particulier au moyen d'un poinçon de presse à chaud ;
d) retrait du composite collé du support.

**9.** Composite, qui peut être obtenu par le collage de deux substrats au moyen d'une masse adhésive durcissable thermiquement selon l'une quelconque des revendications 1 à 7 par le durcissement de la masse adhésive, en particulier par un procédé selon la revendication 8.

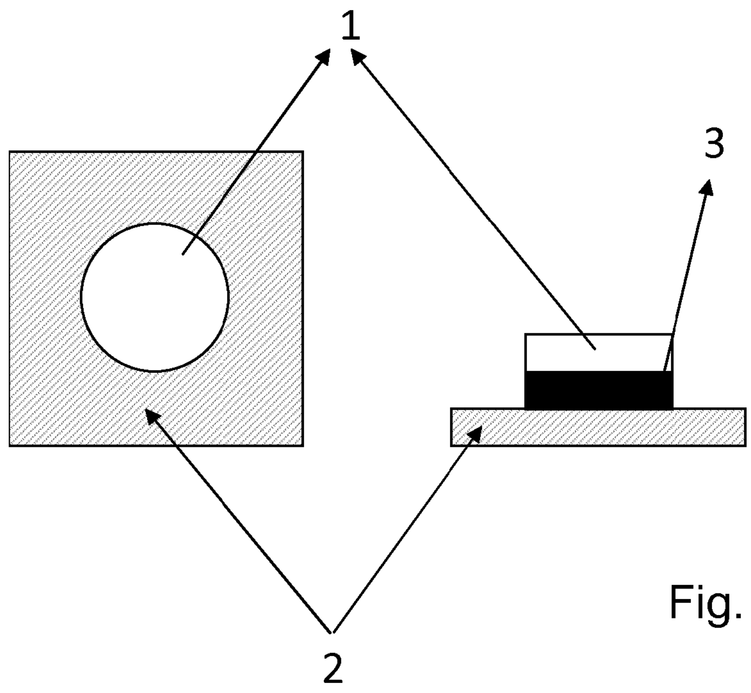


Fig. 1a

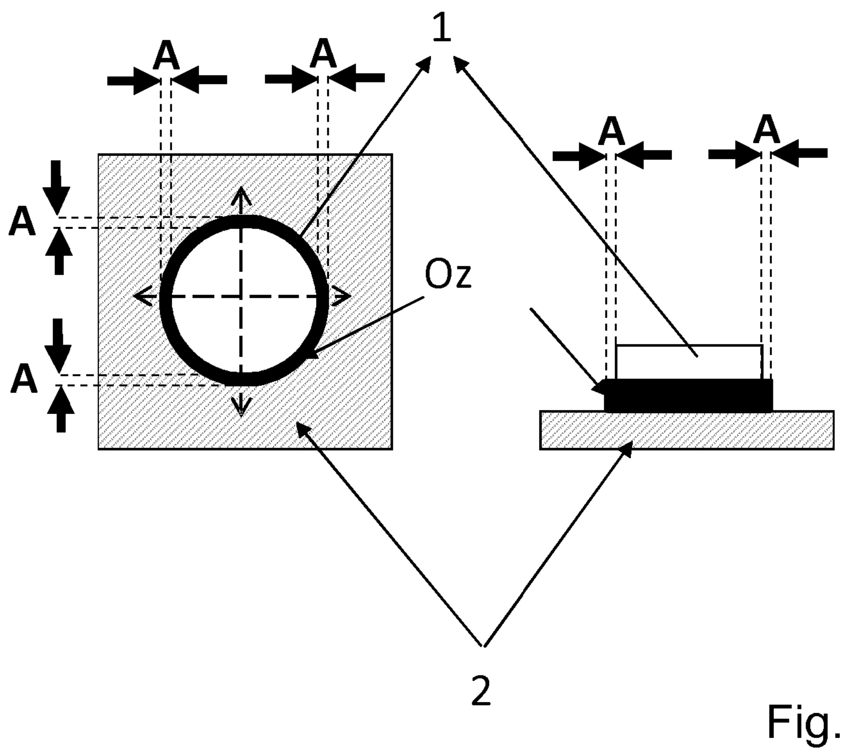


Fig. 1b

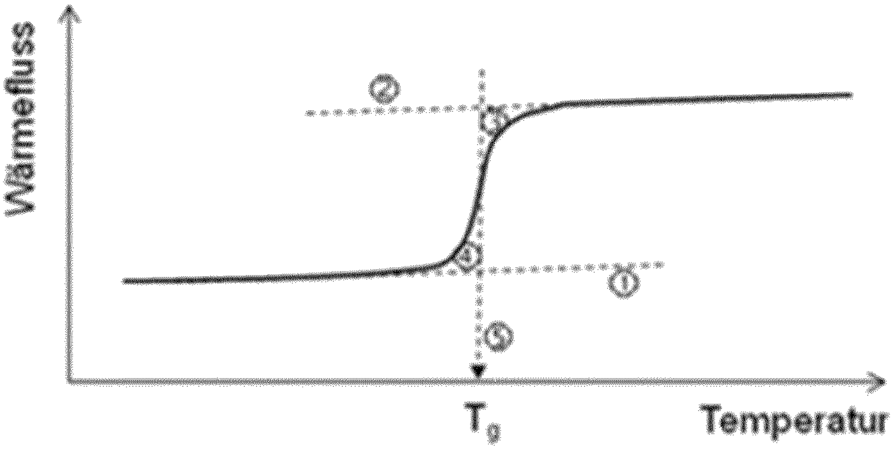


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1028151 B1
- EP 620259 A1
- EP 721975 A
- DE 19519499 A1
- WO 9821287 A1
- US 4552604 A
- EP 914027 A1
- WO 2013101693 A1
- WO 2015048012 A1
- WO 1999057216 A1
- WO 2014059055 A
- WO 2004041943 A
- US 2007026572 A
- WO 2015082143 A1
- WO 9624620 A1
- WO 9844008 A1
- DE 19949352 A1
- US 5945491 A
- US 5854364 A
- US 5789487 A
- WO 9801478 A1
- WO 9931144 A1
- US 20140367670 A1
- US 5242715 A
- EP 393893 A1
- WO 2013156509 A2
- JP 2014062057 A
- JP 2012056915 A
- EP 894841 B1
- EP 1308492 B1


### In der Beschreibung aufgeführte Nicht-Patentliteratur


- **J. V. CRIVELLO.** *J. Polym. Sci. A Polym. Chem.,* 1999, vol. 37, 4241-54
- **U. W. GEDDE.** Polymer Physics. Kluwer, 1999, 70
- **T. FOX ; P. J. FLORY.** *J. Polym. Sci.,* 1954, vol. 14, 315-319
- Polymer Handbook. J. Wiley, 1999, vol. 1
- Houben-Weyl, Methoden der Organischen Chemie. vol. E 19a, 60-147
- *Macromolecules,* 2000, vol. 33, 243-245
- *J. Polym. Sci. A,* 1995, vol. 33, 505ff
- *J. Polym. Sci. B,* 2001, vol. 39, 2397ff
- *Macromolecules,* 1990, vol. 23, 431ff
- *Macromolecules,* 1991, vol. 24, 2689
- *Macromol. Chem. Phys.,* 2001, vol. 202, 2554ff
- **C. DONKER.** *PSTC Annual Technical Proceedings,* Mai 2001, 149-164